(19) Europäisches Patentamt
European Patent Office
Office européen des brevets

(11) **EP 4 456 452 A1**

(12) **EUROPEAN PATENT APPLICATION**
published in accordance with Art. 153(4) EPC

(43) Date of publication:
**30.10.2024 Bulletin 2024/44**

(21) Application number: **22914279.9**

(22) Date of filing: **14.12.2022**

(51) International Patent Classification (IPC):
**H04B 7/11** (2015.01)    **H04B 7/06** (2006.01)
**H04L 5/00** (2006.01)

(52) Cooperative Patent Classification (CPC):
**H04B 7/04; H04B 7/06; H04B 17/11; H04B 17/21;
H04L 5/00; H04L 5/14; H04L 25/02; H04L 25/03**

(86) International application number:
**PCT/CN2022/139129**

(87) International publication number:
**WO 2023/125024 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111673730**

(71) Applicant: **Huawei Technologies Co., Ltd.
Shenzhen, Guangdong 518129 (CN)**

(72) Inventors:
• **LIU, Xianda
Shenzhen, Guangdong 518129 (CN)**

• **HU, Chen
Shenzhen, Guangdong 518129 (CN)**
• **CAI, Shijie
Shenzhen, Guangdong 518129 (CN)**
• **ZHANG, Zhening
Shenzhen, Guangdong 518129 (CN)**
• **LIU, Kunpeng
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS**

(57)    A communication method and apparatus are provided. The method includes: A terminal device receives a first downlink reference signal from a first network device, and the terminal device receives a second downlink reference signal from a second network device. The terminal device determines channel state information. The channel state information is determined based on a ratio of a first channel estimation value to a second channel estimation value. The first channel estimation value is determined based on the first downlink reference signal, and the second channel estimation value is determined based on the second downlink reference signal. The terminal device sends the channel state information. By using the foregoing method, reciprocity calibration between TRPs can be implemented without limiting hardware specifications of the TRPs.

| First network device | Second network device | Terminal device |
|---|---|---|

Step 401: The first network device sends a first downlink reference signal

Step 402: The second network device sends a second downlink reference signal

Step 403: The terminal device determines CSI

Step 404: The terminal device sends the CSI

Step 405: Uplink reference signal

Step 405: Uplink reference signal

Step 406A: The first network device determines a third channel estimation value based on the uplink reference signal

Step 406B: The second network device determines a fourth channel estimation value based on the uplink reference signal

Step 407: The second network device sends the fourth channel estimation value to the first network device

Step 408: The first network device determines a calibration coefficient between the first network device and the second network device based on the CSI, the third channel estimation value, and the fourth channel estimation value

FIG. 4

**Description**

**CROSS-REFERENCE TO RELATED APPLICATIONS**

This application claims priority to Chinese Patent Application No. 202111673730.4, filed with the China National Intellectual Property Administration on December 31, 2021, and entitled "COMMUNICATION METHOD AND APPARATUS", which is incorporated herein by reference in its entirety.

**TECHNICAL FIELD**

Embodiments of this application relate to the wireless communication field, and in particular, to a communication method and apparatus.

**BACKGROUND**

In a time division duplexing (time division duplexing, TDD) scenario, to ensure reciprocity between uplink and downlink channels, a base station having a multi-antenna transmission capability needs to perform reciprocity calibration between antenna ports. In a scenario in which a plurality of stations perform coherent joint transmission (coherent joint transmission, CJT), antenna ports of the plurality of stations send downlink data to a terminal device through coherent joint precoding. Coordination between two transmission reception points (transmission reception point, TRP) (including a TRP 1 and a TRP 2) is used as an example. To ensure that uplink and downlink channel reciprocity is implemented, in addition to reciprocity calibration of antenna ports in the TRPs, the TRP 1 and the TRP 2 also need to perform reciprocity calibration on the antenna ports between the TRPs. In the conventional technology, when reciprocity calibration is performed between TRPs, the TRP 1 and the TRP 2 need to send signals to each other.

For example, when a plurality of coordinated TRPs are located on a same physical pole/tower, when signals are sent between the plurality of coordinated TRPs, power of a received signal may be high. In this case, the TRP needs to support power back-off, but an existing TRP hardware specification may not support power back-off. When a plurality of coordinated TRPs are located on different physical poles/towers, when signals are sent between the plurality of coordinated TRPs, power of a received signal may be low. In this case, the TRP needs to increase signal transmit power. However, an existing TRP hardware specification may not support a further increase in transmit power. Therefore, the foregoing cases impose higher requirements on the TRP hardware specification.

In conclusion, in the CJT scenario, how to implement reciprocity calibration between TRPs based on an existing TRP hardware specification is a problem that deserves attention.

**SUMMARY**

This application provides a communication method and apparatus, to implement reciprocity calibration between TRPs without changing hardware specifications of the TRPs.

According to a first aspect, this application provides a communication method. The method includes: A terminal device receives a first downlink reference signal from a first network device; the terminal device receives a second downlink reference signal from a second network device; the terminal device determines channel state information CSI, where the CSI is determined based on a ratio of a first channel estimation value to a second channel estimation value, the first channel estimation value is determined based on the first downlink reference signal, and the second channel estimation value is determined based on the second downlink reference signal; and the terminal device sends the CSI.

According to the foregoing method, the terminal device determines the first channel estimation value based on the first downlink reference signal, determines the second channel estimation value based on the second downlink reference signal, and determines the CSI based on the ratio of the first channel estimation value to the second channel estimation value. The terminal device sends the CSI, so that a device that receives the CSI can perform reciprocity calibration between the first network device and the second network device based on the CSI, and reciprocity calibration between TRPs can be implemented without limiting hardware specifications of the TRPs.

In a possible design, receive antennas, receive antenna ports, or receive beams of the first downlink reference signal and the second downlink reference signal are the same. Therefore, a first downlink signal and a second downlink signal have a same multiplication coefficient on the terminal device side.

In a possible design, the terminal device receives the first downlink reference signal at a first moment, and the terminal device receives the second downlink reference signal at a second moment. A time interval $\Delta t1$ between the first moment and the second moment satisfies $\Delta t1 \leq T1$, where $T1 \geq 0$, and T1 is a preset value or a value indicated by capability indication information reported by the terminal device. In this manner, it can be ensured that receive multiplication coefficients used when the terminal device receives the first downlink reference signal and the second downlink reference signal are consistent, to ensure an accurate calibration coefficient.

In a possible design, an error between a phase value $\varphi_1$ corresponding to a receive antenna used by the terminal device to receive the first downlink reference signal and a phase value $\varphi_2$ corresponding to a receive antenna used by the terminal device to receive the second downlink reference signal satisfies $|\varphi_1 - \varphi_2| \leq \partial$, where $\partial$ is a preset value greater than 0. In this manner, it can be ensured that the receive multiplication coefficients used when the terminal device receives the first downlink reference signal and the second downlink reference signal are consistent, to ensure the accurate calibration coefficient.

In a possible design, the CSI includes amplitude quantization information and phase quantization information, and the amplitude quantization information and the phase quantization information are determined based on the ratio of the first channel estimation value to the second channel estimation value.

In a possible design, the first channel estimation value is a channel estimation value of bandwidth $W_1$ occupied by the first downlink reference signal, and the second channel estimation value is a channel estimation value of bandwidth $W_2$ occupied by the second downlink reference signal.

In a possible design, both the bandwidth $W_1$ occupied by the first downlink reference signal and the bandwidth $W_2$ occupied by the second downlink reference signal include K subbands. The first channel estimation value is a channel estimation value of a $k^{th}$ subband in the first downlink reference signal, and the second channel estimation value is a channel estimation value of a $k^{th}$ subband in the second downlink reference signal, where k ranges from 1 to K, k is a positive integer, and K is an integer greater than or equal to 2.

In a possible design, an index value of the first downlink reference signal is less than an index value of the second downlink reference signal, the amplitude quantization information and the phase quantization information that are included in the CSI correspond to a first estimation value, and the first estimation value is the ratio of the first channel estimation value to the second channel estimation value.

In a possible design, the method further includes: The terminal device sends an uplink reference signal to the first network device and the second network device.

In a possible design, a transmit antenna corresponding to the uplink reference signal is the same as a receive antenna corresponding to the first downlink reference signal. Therefore, impact of receiving and sending processing on calibration precision on the terminal device side can be eliminated, to improve calibration precision.

In a possible design, bandwidth occupied by the uplink reference signal is the same as the bandwidth $W_1$ occupied by the first downlink reference signal.

In a possible design, the bandwidth $W_1$ occupied by the first downlink reference signal is the same as the bandwidth $W_2$ occupied by the second downlink reference signal, and $W_1 = W_2$.

In a possible design, the terminal device sends the uplink reference signal to the first network device and the second network device at a third moment. A time interval $\Delta t2$ between the third moment and the first moment satisfies $\Delta t2 \leq T2$, where $T2 \geq 0$, and T2 is a preset value or a value indicated by the capability indication information reported by the terminal device; and/or a time interval $\Delta t3$ between the third moment and the second moment satisfies $\Delta t3 \leq T3$, where $T3 \geq 0$, and T3 is a preset value or a value indicated by the capability indication information reported by the terminal device. Therefore, it can be ensured that a channel through which the first downlink reference signal passes and a channel through which the uplink reference signal passes remain unchanged, and it can be ensured that a channel through which the second downlink reference signal passes and a channel through which the uplink reference signal passes remain unchanged.

According to a second aspect, this application provides a communication method. The method includes: A first network device sends a first downlink reference signal; the first network device receives CSI, where the CSI is determined based on a ratio of a first channel estimation value to a second channel estimation value, the first channel estimation value corresponds to the first downlink reference signal, the second channel estimation value corresponds to a second downlink reference signal, and the second downlink reference signal corresponds to a second network device; and the first network device receives an uplink reference signal.

According to the foregoing method, the first network device sends the first downlink reference signal, receives the CSI and the uplink reference signal, and may further perform reciprocity calibration between the first network device and the second network device based on the CSI, a third channel estimation value determined based on the uplink reference signal, and a received fourth channel estimation value. Therefore, reciprocity calibration between TRPs can be implemented without limiting hardware specifications of the TRPs.

In a possible design, bandwidth occupied by the uplink reference signal is the same as bandwidth $W_1$ occupied by the first downlink reference signal. Therefore, impact of receiving and sending processing on calibration precision on the first network device side can be eliminated, and calibration precision can be improved.

In a possible design, the bandwidth $W_1$ occupied by the first downlink reference signal is the same as bandwidth $W_2$ occupied by the second downlink reference signal, and $W_1 = W_2$.

In a possible design, the CSI includes amplitude quantization information and phase quantization information, and the amplitude quantization information and the phase quantization information are determined based on the ratio of the first channel estimation value to the second channel estimation value.

In a possible design, the first channel estimation value is a channel estimation value of the bandwidth $W_1$ occupied by the first downlink reference signal, and the second channel estimation value is a channel estimation value of the bandwidth $W_2$ occupied by the second downlink reference signal.

In a possible design, both the bandwidth $W_1$ occupied by the first downlink reference signal and the bandwidth $W_2$ occupied by the second downlink reference signal include K subbands. The first channel estimation value is a channel estimation value of a $k^{th}$ subband in the first downlink reference signal, and the second channel estimation value is a channel estimation value of a $k^{th}$ subband in the second downlink reference signal, where k ranges from 1 to K, k is a positive integer, and K is an integer greater than or equal to 2.

In a possible design, an index value of the first downlink reference signal is less than an index value of the second downlink reference signal, the amplitude quantization information and the phase quantization information that are included in the CSI correspond to a first estimation value, and the first estimation value is the ratio of the first channel estimation value to the second channel estimation value.

In a possible design, the method further includes: The first network device determines a third channel estimation value based on the uplink reference signal. The third channel estimation value is a first channel estimation value of the uplink reference signal.

In a possible design, a receive antenna used by the first network device to receive the uplink reference signal is the same as a transmit antenna used by the first network device to send the first downlink reference signal. Therefore, impact of receiving and sending processing on calibration precision on the first network device side can be eliminated, and calibration precision can be improved.

In a possible design, the method further includes: The first network device sends the third channel estimation value.

In a possible design, the method further includes: The first network device receives the fourth channel estimation value from the second network device, where the fourth channel estimation value is a second channel estimation value of the uplink reference signal; and

the first network device determines a calibration coefficient between the first network device and the second network device based on the CSI, the third channel estimation value, and the fourth channel estimation value.

In a possible design, when the first channel estimation value is the channel estimation value of the bandwidth $W_1$ occupied by the first downlink reference signal, and the second channel estimation value is the channel estimation value of the bandwidth $W_2$ occupied by the second downlink reference signal, the third channel estimation value is a first channel estimation value of the bandwidth occupied by the uplink reference signal, and the fourth channel estimation value is a second channel estimation value of the bandwidth occupied by the uplink reference signal.

In a possible design, when the first channel estimation value is the channel estimation value of the $k^{th}$ subband in the first downlink reference signal, and the second channel estimation value is the channel estimation value of the $k^{th}$ subband in the second downlink reference signal, the third channel estimation value is a first channel estimation value of a $k^{th}$ subband in the uplink reference signal, and the fourth channel estimation value is a second channel estimation value of the $k^{th}$ subband in the uplink reference signal. Both the bandwidth $W_1$ occupied by the first downlink reference signal and the bandwidth $W_2$ occupied by the second downlink reference signal include K subbands, and the bandwidth occupied by the uplink reference signal includes K subbands, where k ranges from 1 to K, k is a positive integer, and K is an integer greater than or equal to 2.

In a possible design, the calibration coefficient is a ratio of a first ratio to a second ratio, the first ratio is the ratio of the first channel estimation value to the second channel estimation value, and the second ratio is a ratio of the third channel estimation value to the fourth channel estimation value.

According to a third aspect, this application provides a communication method. The method includes: A terminal device receives a first downlink reference signal from a first network device; the terminal device receives a second downlink reference signal from a second network device; the terminal device generates a sequence of a first uplink reference signal and a sequence of a second uplink reference signal, where the sequence of the first uplink reference signal is determined based on a channel estimation value of the first downlink reference signal, and the sequence of the second uplink reference signal is determined based on a channel estimation value of the second downlink reference signal; and the terminal device sends the first uplink reference signal to the second network device, and sends the second uplink reference signal to the first network device.

In conclusion, the terminal device determines the sequence of the first uplink reference signal based on the channel estimation value of the first downlink reference signal, and determines the sequence of the second uplink reference signal based on the channel estimation value of the second downlink reference signal. The terminal device sends the first uplink reference signal to the second network device, and sends the second uplink reference signal to the first network device. Further, the second network device that receives the first uplink reference signal may determine the channel estimation value of the first uplink reference signal, and the first network device that receives the second uplink reference signal may determine the channel estimation value of the second uplink reference signal. Reciprocity calibration between the first network device and the second network device is implemented by using the channel estimation value of the first uplink reference signal and the channel estimation value of the second uplink reference signal, so that reciprocity calibration between TRPs can be implemented without limiting hardware specifications of the TRPs.

In a possible design, receive antennas, receive antenna ports, or receive beams of the first downlink reference signal and the second downlink reference signal are the same. Therefore, a first downlink signal and a second downlink signal have a same multiplication coefficient on the terminal device side.

In a possible design, the terminal device receives the first downlink reference signal at a first moment, and the terminal device receives the second downlink reference signal at a second moment. A time interval $\Delta t1$ between the first moment and the second moment satisfies $\Delta t1 \leq T1$, where $T1 \geq 0$, and T1 is a preset value or a value indicated by capability indication information reported by the terminal device. In this manner, it can be ensured that receive multiplication coefficients used when the terminal device receives the first downlink reference signal and the second downlink reference signal are consistent, to ensure an accurate calibration coefficient.

In a possible design, an error between a phase value $\varphi_1$ corresponding to a receive antenna used by the terminal device to receive the first downlink reference signal and a phase value $\varphi_2$ corresponding to a receive antenna used by the terminal device to receive the second downlink reference signal satisfies $|\varphi_1 - \varphi_2| \leq \partial$, where $\partial$ is a preset value greater than 0. In this manner, it can be ensured that the receive multiplication coefficients used when the terminal device receives the first downlink reference signal and the second downlink reference signal are consistent, to ensure the accurate calibration coefficient.

In a possible design, a transmit antenna corresponding to the first uplink reference signal is the same as a receive antenna corresponding to the first downlink reference signal, and a transmit antenna corresponding to the second uplink reference signal is the same as a receive antenna corresponding to the second downlink reference signal. Therefore, impact of receiving and sending processing on calibration precision on the terminal device side can be eliminated, to improve calibration precision.

In a possible design, the terminal device sends the first uplink reference signal to the second network device at a third moment. A time interval $\Delta t4$ between the first moment and the third moment satisfies $\Delta t4 \leq T4$, where $T4 \geq 0$, and T4 is a preset value or a value indicated by the capability indication information reported by the terminal device. Therefore, it can be ensured that a channel through which the second downlink reference signal passes and a channel through which the first uplink reference signal passes remain unchanged.

In a possible design, the terminal device sends the second uplink reference signal to the first network device at a fourth moment. A time interval $\Delta t5$ between the second moment and the fourth moment satisfies $\Delta t5 \leq T5$, where $T5 \geq 0$, and T5 is a preset value or a value indicated by the capability indication information reported by the terminal device. Therefore, it can be ensured that a channel through which the first downlink reference signal passes and a channel through which the second uplink reference signal passes remain unchanged.

In a possible design, a frequency domain unit occupied by the first uplink reference signal is the same as a frequency domain unit occupied by the first downlink reference signal, and a frequency domain unit occupied by the second uplink reference signal is the same as a frequency domain unit occupied by the second downlink reference signal.

In a possible design, a sequence in an $n_1$th frequency domain unit corresponding to the first uplink reference signal is determined based on a channel estimation value of an $n_1$th frequency domain unit corresponding to the first downlink reference signal, where $n_1$ ranges from 1 to $N_1$, $n_1$ and $N_1$ are positive integers, and $N_1$ is a quantity of frequency domain units occupied by the first uplink reference signal. A sequence in an $n_2$th frequency domain unit corresponding to the second uplink reference signal is determined based on a channel estimation value of an $n_2$th frequency domain unit corresponding to the second downlink reference signal, where $n_2$ ranges from 1 to $N_2$, $n_2$ and $N_2$ are positive integers, and $N_2$ is a quantity of frequency domain units occupied by the second uplink reference signal.

In a possible design, the sequence of the first uplink reference signal is $r_1(m_1) = e^{j\alpha_1 m_1}\bar{r}_1(m_1)\widehat{H}^1_{m_1}$ , where $\widehat{H}^1_{m_1}$ is determined based on a channel estimation value of an $m_1$th resource element RE corresponding to the first downlink reference signal, $\alpha_1$ and $\bar{r}_1$ are respectively a cyclic shift and a basic sequence of the first uplink reference signal, $m_1 = \{0, 1, ..., M_1\}$, $m_1$ and $M_1$ are positive integers, and $M_1$ is a quantity of REs occupied by the first uplink reference signal. The sequence of the second uplink reference signal is $r_2(m_2) = e^{j\alpha_2 m_2}\bar{r}_2(m_2)\widehat{H}^2_{m_2}$ , where $\widehat{H}^2_{m_2}$ is determined based on a channel estimation value of an $m_2$th RE corresponding to the second downlink reference signal, $\alpha_2$ are $\bar{r}_2$ respectively a cyclic shift and a basic sequence of the second uplink reference signal, $m_2 = \{0, 1, ..., M_2\}$, $m_2$ and $M_2$ are positive integers, and $M_2$ is the quantity of REs occupied by the second uplink reference signal.

According to a fourth aspect, this application provides a communication method. The method includes: A first network device sends a first downlink reference signal; the first network device receives a second uplink reference signal, where a sequence of the second uplink reference signal is determined based on a channel estimation value of a second downlink reference signal, and the second downlink reference signal is related to a second network device; the first network device determines a second channel estimation value based on the second uplink reference signal; the first network device sends the second channel estimation value to the second network device; or the first network device receives a first channel estimation value sent by the second network device, where the first channel estimation value is determined based on a first uplink reference signal, and a sequence of the first uplink reference signal is determined based on a channel estimation value of the first downlink reference signal.

In conclusion, the first network device sends the first downlink reference signal, and receives the second uplink reference signal. Further, the first channel estimation value may be determined based on the received second uplink reference signal, and the second channel estimation value determined by the second network device based on the first uplink reference signal may be received, reciprocity calibration between the first network device and the second network device is implemented by using a channel estimation value of the first uplink reference signal and a channel estimation value of the second uplink reference signal, so that reciprocity calibration between TRPs can be implemented without limiting hardware specifications of the TRPs.

In a possible design, a receive antenna corresponding to the second uplink reference signal is the same as a transmit antenna corresponding to the first downlink reference signal. Therefore, impact of receiving and sending processing on calibration precision on the first network device side can be eliminated, and calibration precision can be improved.

In a possible design, a frequency domain unit occupied by the second uplink reference signal is the same as a frequency domain unit occupied by the second downlink reference signal.

In a possible design, a sequence in an $n_2^{th}$ frequency domain unit corresponding to the second uplink reference signal is determined based on a channel estimation value of an $n_2^{th}$ frequency domain unit corresponding to the second downlink reference signal, where $n_2$ ranges from 1 to $N_2$, $n_2$ and $N_2$ are positive integers, and $N_2$ is a quantity of frequency domain units occupied by the second uplink reference signal.

In a possible design, the sequence of the second uplink reference signal is $r_2(m_2) = e^{j\alpha_2 m_2} \bar{r}_2(m_2) \widehat{H}_{m_2}^2$ , where $\widehat{H}_{m_2}^2$ is determined based on a channel estimation value of an $m_2^{th}$ RE corresponding to the second downlink reference signal, $\alpha_2$ and $\bar{r}_2$ are respectively a cyclic shift and a basic sequence of the second uplink reference signal, $m_2 = \{0, 1, ..., M_2\}$, $m_2$ and $M_2$ are positive integers, and $M_2$ is a quantity of REs occupied by the second uplink reference signal.

In a possible design, the first channel estimation value is a channel estimation value corresponding to an $n^{th}$ frequency domain unit of the first uplink reference signal, and the second channel estimation value is a channel estimation value corresponding to an $n^{th}$ frequency domain unit of the second uplink reference signal, where N is a quantity of frequency domain units occupied by the first uplink reference signal, n ranges from 1 to N, and n and N are positive integers.

In a possible design, the first network device determines a calibration coefficient between the first network device and the second network device based on the first channel estimation value and the second channel estimation value.

In a possible design, the calibration coefficient is a ratio of the first channel estimation value to the second channel estimation value.

According to a fifth aspect, this application provides a communication apparatus. The apparatus is a terminal device or an apparatus having a function of a terminal device, and the apparatus includes a transceiver module and a processing module.

The transceiver module is configured to receive a first downlink reference signal from a first network device, and receive a second downlink reference signal from a second network device.

The processing module is configured to determine channel state information CSI. The CSI is determined based on a ratio of a first channel estimation value to a second channel estimation value. The first channel estimation value is determined based on the first downlink reference signal, and the second channel estimation value is determined based on the second downlink reference signal.

The transceiver module is configured to send the CSI.

In a possible design, receive antennas, receive antenna ports, or receive beams of the first downlink reference signal and the second downlink reference signal are the same.

In a possible design, the transceiver module is configured to receive the first downlink reference signal at a first moment.

The transceiver module is configured to receive the second downlink reference signal at a second moment.

A time interval $\Delta t1$ between the first moment and the second moment satisfies $\Delta t1 \le T1$, where $T1 \ge 0$, and T1 is a preset value or a value indicated by capability indication information reported by the terminal device.

In a possible design, an error between a phase value $\varphi_1$ corresponding to a receive antenna used by the terminal device to receive the first downlink reference signal and a phase value $\varphi_2$ corresponding to a receive antenna used by the terminal device to receive the second downlink reference signal satisfies $|\varphi_1 - \varphi_2| \leq \partial$, where $\partial$ is a preset value greater than 0.

In a possible design, the CSI includes amplitude quantization information and phase quantization information, and the amplitude quantization information and the phase quantization information are determined based on the ratio of the first channel estimation value to the second channel estimation value.

In a possible design, the first channel estimation value is a channel estimation value of bandwidth $W_1$ occupied by the first downlink reference signal, and the second channel estimation value is a channel estimation value of bandwidth $W_2$ occupied by the second downlink reference signal.

In a possible design, both the bandwidth $W_1$ occupied by the first downlink reference signal and the bandwidth $W_2$ occupied by the second downlink reference signal include K subbands.

The first channel estimation value is a channel estimation value of a $k^{th}$ subband in the first downlink reference signal, and the second channel estimation value is a channel estimation value of a $k^{th}$ subband in the second downlink reference signal, where k ranges from 1 to K, k is a positive integer, and K is an integer greater than or equal to 2.

In a possible design, an index value of the first downlink reference signal is less than an index value of the second downlink reference signal, the amplitude quantization information and the phase quantization information that are included in the CSI correspond to a first estimation value, and the first estimation value is the ratio of the first channel estimation value to the second channel estimation value.

In a possible design, the transceiver module is configured to send an uplink reference signal to the first network device and the second network device.

In a possible design, a transmit antenna corresponding to the uplink reference signal is the same as the receive antenna corresponding to the first downlink reference signal.

In a possible design, bandwidth occupied by the uplink reference signal is the same as the bandwidth $W_1$ occupied by the first downlink reference signal.

In a possible design, the bandwidth $W_1$ occupied by the first downlink reference signal is the same as the bandwidth $W_2$ occupied by the second downlink reference signal, and $W_1 = W_2$.

In a possible design, the transceiver module is configured to send the uplink reference signal to the first network device and the second network device at a third moment.

A time interval $\Delta t2$ between the third moment and the first moment satisfies $\Delta t2 \leq T2$, where $T2 \geq 0$, and T2 is a preset value or a value indicated by the capability indication information reported by the terminal device; and/or a time interval $\Delta t3$ between the third moment and the second moment satisfies $\Delta t3 \leq T3$, where $T3 \geq 0$, and T3 is a preset value or a value indicated by the capability indication information reported by the terminal device.

According to a sixth aspect, this application provides a communication apparatus. The apparatus is a first network device or a module having a function of a first network device, and the apparatus includes a transceiver module and a processing module.

The processing module invokes the transceiver module to: send a first downlink reference signal; receive CSI, where the CSI is determined based on a ratio of a first channel estimation value to a second channel estimation value, the first channel estimation value corresponds to the first downlink reference signal, the second channel estimation value corresponds to a second downlink reference signal, and the second downlink reference signal corresponds to a second network device; and receive an uplink reference signal.

In a possible design, bandwidth occupied by the uplink reference signal is the same as bandwidth $W_1$ occupied by the first downlink reference signal.

In a possible design, the bandwidth $W_1$ occupied by the first downlink reference signal is the same as bandwidth $W_2$ occupied by the second downlink reference signal, and $W_1 = W_2$.

In a possible design, the CSI includes amplitude quantization information and phase quantization information, and the amplitude quantization information and the phase quantization information are determined based on the ratio of the first channel estimation value to the second channel estimation value.

In a possible design, the first channel estimation value is a channel estimation value of the bandwidth $W_1$ occupied by the first downlink reference signal, and the second channel estimation value is a channel estimation value of the bandwidth $W_2$ occupied by the second downlink reference signal.

In a possible design, both the bandwidth $W_1$ occupied by the first downlink reference signal and the bandwidth $W_2$ occupied by the second downlink reference signal include K subbands.

The first channel estimation value is a channel estimation value of a $k^{th}$ subband in the first downlink reference signal, and the second channel estimation value is a channel estimation value of a $k^{th}$ subband in the second downlink reference signal, where k ranges from 1 to K, k is a positive integer, and K is an integer greater than or equal to 2.

In a possible design, an index value of the first downlink reference signal is less than an index value of the second downlink reference signal, the amplitude quantization information and the phase quantization information that are included in the CSI correspond to a first estimation value, and the first estimation value is the ratio of the first channel estimation value to the second channel estimation value.

In a possible design, the processing module is configured to determine a third channel estimation value based on the uplink reference signal. The third channel estimation value is a first channel estimation value of the uplink reference signal.

In a possible design, a receive antenna used by the transceiver module to receive the uplink reference signal is the same as a transmit antenna used by the first network device to send the first downlink reference signal.

In a possible design, the transceiver module is configured to send the third channel estimation value.

In a possible design, the transceiver module is configured to receive a fourth channel estimation value from the second network device. The fourth channel estimation value is a second channel estimation value of the uplink reference signal.

The processing module is configured to determine a calibration coefficient between the first network device and the second network device based on the CSI, the third channel estimation value, and the fourth channel estimation value.

In a possible design, when the first channel estimation value is the channel estimation value of the bandwidth $W_1$ occupied by the first downlink reference signal, and the second channel estimation value is the channel estimation value of the bandwidth $W_2$ occupied by the second downlink reference signal, the third channel estimation value is a first channel estimation value of the bandwidth occupied by the uplink reference signal, and the fourth channel estimation value is a second channel estimation value of the bandwidth occupied by the uplink reference signal.

In a possible design, when the first channel estimation value is the channel estimation value of the $k^{th}$ subband in the first downlink reference signal, and the second channel estimation value is the channel estimation value of the $k^{th}$ subband in the second downlink reference signal, the third channel estimation value is a first channel estimation value of a $k^{th}$ subband in the uplink reference signal, and the fourth channel estimation value is a second channel estimation value of the $k^{th}$ subband in the uplink reference signal. Both the bandwidth $W_1$ occupied by the first downlink reference signal and the bandwidth $W_2$ occupied by the second downlink reference signal include K subbands, and the bandwidth occupied by the uplink reference signal includes K subbands, where k ranges from 1 to K, k is a positive integer, and K is an integer greater than or equal to 2.

In a possible design, the calibration coefficient is a ratio of a first ratio to a second ratio, the first ratio is the ratio of the first channel estimation value to the second channel estimation value, and the second ratio is a ratio of the third channel estimation value to the fourth channel estimation value.

According to a seventh aspect, this application provides a communication apparatus. The apparatus is a terminal device or an apparatus having a function of a terminal device, and the apparatus includes a processing module and a transceiver module.

The transceiver module is configured to receive a first downlink reference signal from a first network device, and receive a second downlink reference signal from a second network device.

The processing module is configured to generate a sequence of a first uplink reference signal and a sequence of a second uplink reference signal. The sequence of the first uplink reference signal is determined based on a channel estimation value of the first downlink reference signal, and the sequence of the second uplink reference signal is determined based on a channel estimation value of the second downlink reference signal.

The transceiver module is configured to send the first uplink reference signal to the second network device, and send the second uplink reference signal to the first network device.

In a possible design, receive antennas, receive antenna ports, or receive beams of the first downlink reference signal and the second downlink reference signal are the same.

In a possible design, the transceiver module is configured to: receive the first downlink reference signal at a first moment; and receive the second downlink reference signal at a second moment.

A time interval $\Delta t1$ between the first moment and the second moment satisfies $\Delta t1 \leq T1$, where $T1 \geq 0$, and T1 is a preset value or a value indicated by capability indication information reported by the terminal device.

In a possible design, an error between a phase value $\varphi_1$ corresponding to a receive antenna used by the terminal device to receive the first downlink reference signal and a phase value $\varphi_2$ corresponding to a receive antenna used by the terminal device to receive the second downlink reference signal satisfies $|\varphi_1 - \varphi_2| \leq \partial$, where $\partial$ is a preset value greater than 0.

In a possible design, a transmit antenna corresponding to the first uplink reference signal is the same as the receive antenna corresponding to the first downlink reference signal, and a transmit antenna corresponding to the second uplink reference signal is the same as the receive antenna corresponding to the second downlink reference signal.

In a possible design, the transceiver module is configured to send the first uplink reference signal to the second network device at a third moment.

A time interval $\Delta t4$ between the first moment and the third moment satisfies $\Delta t4 \leq T4$, where $T4 \geq 0$, and T4 is a preset value or a value indicated by the capability indication information reported by the terminal device.

In a possible design, the transceiver module is configured to send the second uplink reference signal to the first network device at a fourth moment.

A time interval $\Delta t5$ between the second moment and the fourth moment satisfies $\Delta t5 \leq T5$, where $T5 \geq 0$, and $T5$ is a preset value or a value indicated by the capability indication information reported by the terminal device.

In a possible design, a frequency domain unit occupied by the first uplink reference signal is the same as a frequency domain unit occupied by the first downlink reference signal, and a frequency domain unit occupied by the second uplink reference signal is the same as a frequency domain unit occupied by the second downlink reference signal.

In a possible design, a sequence in an $n_1{}^{th}$ frequency domain unit corresponding to the first uplink reference signal is determined based on a channel estimation value of an $n_1{}^{th}$ frequency domain unit corresponding to the first downlink reference signal, where $n_1$ ranges from 1 to $N_1$, $n_1$ and $N_1$ are positive integers, and $N_1$ is a quantity of frequency domain units occupied by the first uplink reference signal.

A sequence in an $n_2{}^{th}$ frequency domain unit corresponding to the second uplink reference signal is determined based on a channel estimation value of an $n_2{}^{th}$ frequency domain unit corresponding to the second downlink reference signal, where $n_2$ ranges from 1 to $N_2$, $n_2$ and $N_2$ are positive integers, and $N_2$ is a quantity of frequency domain units occupied by the second uplink reference signal.

In a possible design, the sequence of the first uplink reference signal is $r_1(m_1) = e^{j\alpha_1 m_1} \bar{r}_1(m_1) \widehat{H}^1_{m_1}$, where $\widehat{H}^1_{m_1}$ is determined based on a channel estimation value of an $m_1{}^{th}$ resource element RE corresponding to the first downlink reference signal, $\alpha_1$ and $\bar{r}_1$ are respectively a cyclic shift and a basic sequence of the first uplink reference signal, $m_1 = \{0, 1, ..., M_1\}$, $m_1$ and $M_1$ are positive integers, and $M_1$ is a quantity of REs occupied by the first uplink reference signal.

The sequence of the second uplink reference signal is $r_2(m_2) = e^{j\alpha_2 m_2} \bar{r}_2(m_2) \widehat{H}^2_{m_2}$, where $\widehat{H}^2_{m_2}$ is determined based on a channel estimation value of an $m_2{}^{th}$ RE corresponding to the second downlink reference signal, $\alpha_2$ and $\bar{r}_2$ are respectively a cyclic shift and a basic sequence of the second uplink reference signal, $m_2 = \{0, 1, ..., M_2\}$, $m_2$ and $M_2$ are positive integers, and $M_2$ is a quantity of REs occupied by the second uplink reference signal.

According to an eighth aspect, this application provides a communication apparatus. The apparatus is a first network device or an apparatus having a function of a first network device, and the apparatus includes a transceiver module and a processing module.

The processing module invokes the transceiver module to: send a first downlink reference signal; and

receive a second uplink reference signal, where a sequence of the second uplink reference signal is determined based on a channel estimation value of a second downlink reference signal, and the second downlink reference signal is related to a second network device. The first network device determines a second channel estimation value based on the second uplink reference signal; and

sends the second channel estimation value to the second network device, or receives a first channel estimation value sent by the second network device, where the first channel estimation value is determined based on a first uplink reference signal, and a sequence of the first uplink reference signal is determined based on a channel estimation value of the first downlink reference signal.

In a possible design, a receive antenna corresponding to the second uplink reference signal is the same as a transmit antenna corresponding to the first downlink reference signal.

In a possible design, a frequency domain unit occupied by the second uplink reference signal is the same as a frequency domain unit occupied by the second downlink reference signal.

In a possible design, a sequence in an $n_2{}^{th}$ frequency domain unit corresponding to the second uplink reference signal is determined based on a channel estimation value of an $n_2{}^{th}$ frequency domain unit corresponding to the second downlink reference signal, where $n_2$ ranges from 1 to $N_2$, $n_2$ and $N_2$ are positive integers, and $N_2$ is a quantity of frequency domain units occupied by the second uplink reference signal.

In a possible design, the sequence of the second uplink reference signal is $r_2(m_2) = e^{j\alpha_2 m_2} \bar{r}_2(m_2) \widehat{H}^2_{m_2}$, where $\widehat{H}^2_{m_2}$ is determined based on a channel estimation value of an $m_2{}^{th}$ RE corresponding to the second downlink reference signal, $\alpha_2$ and $\bar{r}_2$ are respectively a cyclic shift and a basic sequence of the second uplink reference signal, $m_2 = \{0, 1, ..., M_2\}$, $m_2$ and $M_2$ are positive integers, and $M_2$ is a quantity of REs occupied by the second uplink reference signal.

In a possible design, the first channel estimation value is a channel estimation value corresponding to an $n^{th}$ frequency domain unit of the first uplink reference signal, and the second channel estimation value is a channel estimation value corresponding to an $n^{th}$ frequency domain unit of the second uplink reference signal, where N is a quantity of frequency domain units occupied by the first uplink reference signal, n ranges from 1 to N, and n and N are positive integers.

In a possible design, the processing module is configured to determine a calibration coefficient between the first network device and the second network device based on the first channel estimation value and the second channel estimation value.

In a possible design, the calibration coefficient is a ratio of the first channel estimation value to the second channel estimation value.

According to a ninth aspect, this application further provides an apparatus. The apparatus may perform the foregoing method design. The apparatus may be a chip or a circuit that can perform functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is mounted is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The function may be implemented by hardware, or may be implemented by executing corresponding software by hardware. The hardware or the software includes one or more units that correspond to the foregoing functions.

According to a tenth aspect, this application provides a computer-readable storage medium. The computer-readable storage medium stores a computer program, and when the computer program is run on an apparatus, the method according to any one of the possible designs is performed.

According to an eleventh aspect, this application provides a computer program product. The computer program product includes a computer program, and when the computer program is run on an apparatus, the method according to any one of the possible designs is performed.

According to a twelfth aspect, this application provides a communication system. The system includes a terminal device, a first network device, and a second network device. The terminal device performs the method in any possible design of the first aspect and the third aspect, and the first network device and the second network device perform the method in any possible design of the second aspect and the fourth aspect.

In addition, for technical effect brought by any implementation in the fifth aspect to the eighth aspect, refer to technical effect brought by different implementations in the first aspect to the fourth aspect. Details are not described again herein.

## BRIEF DESCRIPTION OF DRAWINGS

FIG. 1 is a diagram of an architecture of a mobile communication system to which this application is applied;
FIG. 2 is a diagram of reciprocity calibration in a TRP 1 according to an embodiment of this application;
FIG. 3 is a diagram of reciprocity calibration between a TRP 1 and a TRP 2 according to an embodiment of this application;
FIG. 4 is an overview flowchart of a communication method according to an embodiment of this application;
FIG. 5 is another overview flowchart of a communication method according to an embodiment of this application;
FIG. 6 is a diagram in which a terminal device loads a channel estimation value of a first downlink reference signal to a first uplink reference signal according to an embodiment of this application;
FIG. 7 is a diagram of a structure of a communication apparatus according to an embodiment of this application; and
FIG. 8 is another diagram of a structure of a communication apparatus according to an embodiment of this application.

DESCRIPTION OF EMBODIMENTS

The following clearly and completely describes technical solutions in embodiments of this application with reference to accompanying drawings in embodiments of this application. It is clear that the described embodiments are merely some but not all of embodiments of this application. In the specification, claims, and accompanying drawings of this application, terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants mean to cover non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

Embodiments of this application are applicable to both a homogeneous network scenario and a heterogeneous network scenario, and a transmission point is not limited. Embodiments of this application may be applicable to coordinated multipoint transmission between macro base stations, between micro base stations, and between a macro base station and a micro base station, and are applicable to a frequency division duplex (frequency division duplex, FDD) system and/or a time division duplex (time division duplex, TDD) system. Embodiments of this application are applicable to a single transmission reception point (Single-TRP) scenario or a multiple transmission reception point (multiple TRP, Multi-TRP) scenario, and any derived scenario thereof. The technical solutions provided in embodiments of this application can be used in various communication systems. For example, the technical solutions are applicable to a 4G system or a 5G system, or may be applicable to another future-oriented new system. This is not specifically limited in embodiments of this application. In addition, the term "system" and "network" may be substituted for each other.

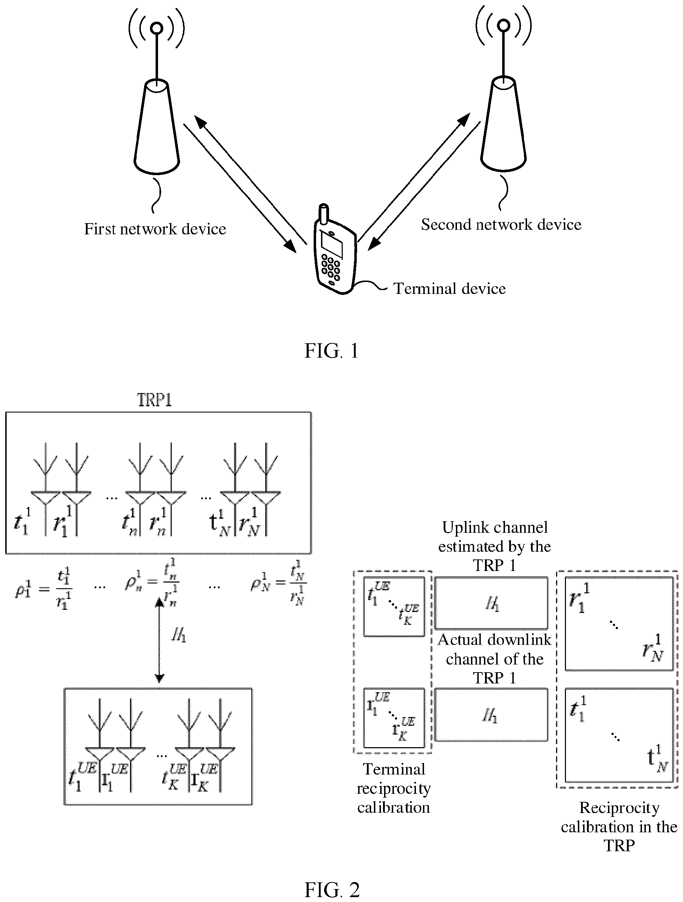

FIG. 1 is a diagram of an architecture of a mobile communication system to which an embodiment of this application is applied. A terminal device is connected to two network devices in a wireless manner or a wired manner. The two network devices may be independent network devices or non-independent network devices. For example, back-end processors of the two network devices are a same processor.

The network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like; or the network device may be a module or a unit that implements a part of functions of a base station, for example, may be a central unit (central unit, CU), or a distributed unit (distributed unit, DU). The network device further includes but is not limited to a TRP or a remote radio head (remote radio head, RRH).

The network device may send a downlink signal and receive an uplink signal. A specific technology and a specific device form that are used by the network device are not limited in embodiments of this application.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

The terminal device may receive a downlink signal or a sidelink signal, and send an uplink signal or a sidelink signal. A specific technology and a specific device form that are used by the terminal device are not limited in embodiments of this application.

It should be understood that FIG. 1 is only a simplified diagram of an example for ease of understanding. The communication system 100 may further include another network device or another terminal device, which is not shown in FIG. 1.

The network device and the terminal device may be deployed on the land, including an indoor device, an outdoor device, a handheld device, or a vehicle-mounted device; may be deployed on the water surface; or may be deployed on a plane, a balloon, and a satellite in the air. An application scenario of the network device and the terminal device is not limited in embodiments of this application.

The network device and the terminal device may communicate with each other by using a licensed spectrum, or may communicate with each other by using an unlicensed spectrum, or may communicate with each other by using both the licensed spectrum and the unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

For ease of understanding embodiments of this application, several basic concepts in embodiments of this application are briefly described.

1. Quasi co-location (quasi co-location, QCL) assumption of a signal:

If a large-scale characteristic of a channel for transmitting a symbol on an antenna port can be inferred from a channel for transmitting a symbol on another antenna port, the two antenna ports are referred to as quasi co-location.

After being sent by a transmit end, a signal passes through a channel and then is received by a receive end, and a large-scale characteristic of the channel through which the signal passes includes at least the following.

Doppler shift (Doppler shift): Because there is an angle between a moving direction of the receive end and a direction of arrival of the signal, a Doppler shift occurs in the signal. For example, a frequency when the signal is sent is fc, and a frequency when the signal is received is fc+/-fd due to movement of the receive end, where fd is a Doppler shift.

Doppler spread (Doppler spread): Because a signal is transmitted through a scattering path, a frequency band of signal transmission spreads out of a band at a receive end, causing a Doppler spread.

Delay spread (delay spread): A pulse signal sent by a transmit end includes not only the signal itself but also a signal at each delay point in a signal received by a receive end. This causes time width extension of the signal.

Average delay (average delay): An average delay is an average delay for a signal to arrive at the receive end after passing through multipath channels.

Spatial Rx parameter (spatial Rx parameter): A transmit end sends a signal by using a beamforming (beamforming) solution (digital weighted sum), so that the sent signal has a directional transmission characteristic in space. A receive end may use a beamforming solution corresponding to transmit beamforming to improve received signal performance, and the receive beamforming information is spatial receive parameter information.

2. Multi-TRP coordinated transmission: A plurality of transmission nodes complete data scheduling and transmission for a same terminal device in a coordinated scheduling manner. The plurality of transmission nodes may be connected to one central scheduler by using an optical fiber, so that data transmission of the plurality of transmission nodes may be uniformly scheduled in a coordinated manner.

3. Port: A port describes an air interface resource corresponding to a signal sent by a transmit end/a signal received by a receive end. The air interface resource includes but is not limited to: a time domain resource, for example, an orthogonal frequency division multiplexing (orthogonal frequency division multiplexing, OFDM) symbol, a slot (slot), or a frame (frame); a frequency domain resource, for example, a resource element (resource element, RE), a subcarrier (subcarrier), or a resource block (resource block, RB); a space domain resource, for example, beam information; a code domain resource; or a transmit/receive antenna resource.

4. Uplink and downlink channel reciprocity: The essence is that because electromagnetic wave propagation is reversible, in a scenario in which the uplink and the downlink use a same frequency band and a same transmit/receive antenna, the uplink and downlink channels have equivalent characteristics: the same path loss, delay, phase, and the like in uplink and downlink transmission. In an ideal case, $H_{DL} = H_{UL}^T$. By using reciprocity, the network device may directly obtain a channel by using a reference signal sent by the terminal device in an uplink, to perform downlink scheduling, where $H_{UL}$ and $H_{DL}$ are two matrices, $H_{UL}$ indicates an uplink channel through which an uplink signal passes, and $H_{DL}$ indicates a downlink channel through which a downlink signal passes. It is assumed that a dimension of $H_{DL}$ is a quantity of transmit antennas on a network device side×a quantity of receive antennas on a UE side, and a dimension of $H_{UL}$ is a quantity of transmit antennas on a terminal device side×a quantity of receive antennas on a base station side. To ensure coherent transmission of a plurality of antennas, each transmit antenna of the network device needs to perform reciprocity calibration on receiving and transmitting of the transmit antenna, to determine a reciprocity calibration coefficient, and reciprocity calibration needs to be performed between the transmit antennas of the network device. In other words, reciprocity calibration is performed between the transmit antennas based on the reciprocity calibration coefficient for receiving and transmitting of the transmit antennas, to align amplitude and phase deviations between the transmit antennas, thereby ensuring coherent transmission of the plurality of antennas.

The following describes uplink and downlink channel reciprocity by using an example in which a single base station (for example a TRP 1) serves user equipment (user equipment, UE).

In a scenario in which the TRP 1 serves the UE, in a process from sending a signal by a transmit end to obtaining the signal by a receive end, amplitude and a phase of a channel through which the signal passes are jointly determined by "a receive and transmit channel on a UE side+a radio propagation channel response+a receive and transmit channel on a TRP 1 side". For example, an uplink signal generated by the UE passes through a multiplication coefficient $t_k^{UE}$ when being sent to a transmission medium (for example, air) through a baseband and a radio frequency link on a UE side, and passes through a multiplication coefficient $r_n^1$ on a receive link and a baseband on a TRP 1 side after passing through a channel response $H_{UL}$. $t_k^{UE}$ is a transmit coefficient on a $k^{th}$ transmit antenna of the UE, and k is a positive integer. $r_n^1$ is a receive coefficient on an $n^{th}$ receive antenna of the TRP 1, and n is a positive integer. A downlink signal generated by the TRP 1 passes through a multiplication coefficient $t_n^1$ when being sent to a transmission medium (for example, air) through a baseband and a radio frequency link on a TRP 1 side, and passes through a multiplication coefficient $r_k^{UE}$ on a receive link and a baseband on a UE side after passing through a channel response $H_{DL}$. $t_n^1$ is a transmit coefficient on an $n^{th}$ transmit antenna of the TRP 1. $r_k^{UE}$ is a reception coefficient on a $k^{th}$ receive antenna of the UE.

It can be learned from a principle of uplink and downlink channel reciprocity that a downlink channel response $H_{DL}$ that needs to be obtained on the TRP 1 side may be directly obtained through transformation by using an uplink channel response $H_{UL}$ obtained on the TRP 1 side based on a property $H_{DL} = H_{\mathrm{UL}}^T$, thereby reducing CSI feedback overheads and losses. $H_{UL}$ indicates an uplink channel through which the uplink signal passes, and $H_{DL}$ indicates a downlink channel through which the downlink signal passes.

A reference signal received on a downlink UE side may be represented as $s_{DL} t_n^1 H_1 r_k^{UE}$, and a reference signal received on an uplink base station side may be represented as $s_{UL} t_k^{UE} H_1^T r_n^1$. Based on $H_{DL} = H_{\mathrm{UL}}^T$, $H_1$ indicates the downlink channel through which the downlink signal passes, that is, $H_1 = H_{DL}$. $H_1^T$ indicates a downlink channel through which the uplink signal passes, that is, $H_1^T = H_{UL}$. $s_{DL}$ is a sequence of the downlink signal, and $s_{UL}$ is a sequence of the uplink signal.

If $t_k^{UE}$ and $r_k^{UE}$ are different, uplink and downlink channels do not have reciprocity, that is, there is a deviation between uplink and downlink amplitude and phases. As a result, a downlink (downlink, DL) channel cannot be directly obtained by using an uplink (uplink, UL) channel. Similarly, if $r_n^1$ and $t_n^1$ are different, uplink and downlink channels do not have reciprocity. Therefore, to support communication completed through channel reciprocity, the UE needs to ensure that $t_k^{UE}$ and $r_k^{UE}$ are the same, and the TRP 1 needs to ensure that at least $r_n^1$ and $t_n^1$ are known, so that compensation can be performed when receiving is performed on the TRP 1 side. In other words, the TRP 1 needs to perform reciprocity calibration.

The right side of FIG. 2 shows an uplink channel estimated by the TRP 1 and an actual downlink channel of the TRP 1. When uplink and downlink channels have reciprocity, the uplink channel estimated by the TRP 1 is the same as the actual uplink channel of the TRP 1. $t_1^{UE}$ to $t_K^{UE}$ respectively correspond to transmit coefficients of K transmit antennas of the UE, transmit coefficients of transmit antenna ports, or transmit coefficients of transmit beams, where K is a positive integer, $r_1^1$ to $r_N^1$ respectively correspond to receive coefficients of N receive antennas of the TRP 1, receive coefficients of receive beams of the TRP 1, or receive coefficients of receive antenna ports, where N is a positive integer. $r_1^{UE}$ to $r_K^{UE}$ respectively correspond to receive coefficients of K receive antennas of the UE, receive coefficients of receive antenna ports, or receive coefficients of receive beams. $t_1^1$ to $t_N^1$ respectively correspond to transmit coefficients of N transmit antennas of the TRP 1, transmit coefficients of transmit antenna ports, or transmit coefficients of transmit beams.

Reciprocity calibration on the UE side is not limited in this application. Reciprocity calibration on the TRP 1 side means that the TRP 1 side needs to obtain values of $\rho_1^1$, $\rho_n^1$, ..., and $\rho_N^1$ of the TRP 1, so that the TRP 1 side may adjust amplitude and a phase of a received channel based on the values of $\rho_1^1$, $\rho_n^1$, ..., and $\rho_N^1$, to ensure reciprocity between uplink and downlink channels. $\rho_1^1 = t_1^1/r_1^1$, ..., and $\rho_N^1 = t_N^1/r_N^1$, as shown on the left side of FIG. 2.

Considering CJT, a plurality of stations jointly transmit downlink data to the terminal device, that is, deliver a physical downlink shared channel (physical downlink shared channel, PDSCH). It is assumed that the TRP 1 and a TRP 2 coordinate, an air interface channel through which the downlink data passes may be understood as: $H=[H_1H_2]$, where $H_1$ corresponds to a channel dimension $T_{x1} \times R_x$ from the TRP 1 to the UE, and $H_2$ corresponds to a channel dimension $T_{x2} \times R_x$ from the TRP 2 to the UE. Therefore, a channel dimension of an equivalent channel H through which the TRP 1 and the TRP 2 simultaneously send downlink data to the UE is $(T_{x1}+T_{x2}) \times R_x$.

A reference signal received on the downlink UE side may be represented as $s_{DL}[t^1H_1t^2H_2]r^{UE}$, and a reference signal received on the uplink TRP side may be represented as $s_{UL}t^{UE}[H_1^Tr^1H_2^Tr^2]$. $r^{UE}=[r_1^{UE}...r_K^{UE}]$, that is, $r^{UE}$ includes receive coefficients of receive antennas of the UE. $t^{UE}=[t_1^{UE}...t_K^{UE}]$, that is, $t^{UE}$ includes transmit coefficients of transmit antennas of the UE. $t^1=[t_1^1...t_N^1]$, that is, $t^1$ includes transmit coefficients of transmit antennas of the TRP 1. $t^2=[t_1^2...t_M^2]$, that is, $t^2$ includes transmit coefficients of transmit antennas of the TRP 2. $r^1=[r_1^1...r_N^1]$, that is, $r^1$ includes receive coefficients of receive antennas of the TRP 1. $r^2=[r_1^2...r_M^2]$, that is, $r^2$ includes receive coefficients of receive antennas of the TRP 2. K, M, and N are positive integers.

Generally, a transmit/receive multiplication coefficient ratio within a TRP may be obtained through reciprocity calibration in the TRP, for example, $t^1/r^1$ and $t^2/r^2$. However, reciprocity calibration between TRPs is not supported, for example, relative relationships between $t^1$, $r^1$ and $t^2$, and $r^2$ are unknown. Therefore, in a CJT transmission scenario, based on calibration coefficients in the TRP 1 (the TRP 1 needs to obtain values of $\rho_1^1$, $\rho_n^1$, ..., and $\rho_N^1$ of the TRP 1) and calibration coefficients in the TRP 2 (the TRP 2 needs to obtain values of $\rho_1^2$, $\rho_m^2$, and $\rho_M^2$ of the TRP 2), calibration between the TRP 1 and the TRP 2 needs to be additionally performed (that is, a relative relationship between $\rho_n^1$ and $\rho_m^2$ is obtained), so that uplink/downlink reciprocity is also true in the CJT transmission scenario.

For the CJT scenario, an existing manner of calibration between TRPs may be completed by using a backhauled signal between the TRPs. To be specific, the TRP 1 sends a signal to the TRP 2, and the TRP 2 also sends a signal to the TRP 1.

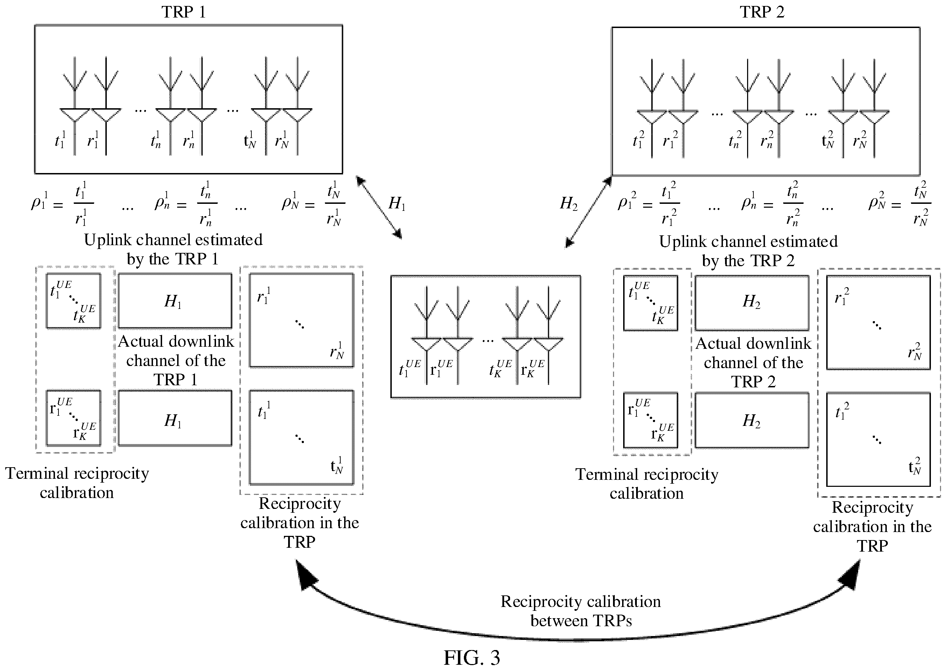

As shown in FIG. 3, when the TRP 2 sends a signal to the TRP 1, a channel estimated by the TRP 1 is $h_1 = t_m^2 H_{2\to1} r_n^1$, where $t_m^2$ is a transmit coefficient on an $m^{th}$ transmit antenna of the TRP 2, and m is a positive integer. $r_n^1$ is the receive coefficient on the $n^{th}$ receive antenna of the TRP 1, and n is a positive integer.

When the TRP 1 sends a signal to the TRP 2, an actual channel of the TRP 1 is $h_2 = r_m^2 H_{1\to2} t_n^1$, where $t_n^1$ is the transmit coefficient on the $n^{th}$ transmit antenna of the TRP 1. $r_m^2$ is a reception coefficient on an $m^{th}$ receive antenna of the TRP 2.

When it is assumed that $H_{2\to1}=H_{1\to2}$, $\dfrac{h_2}{h_1} = \dfrac{t_n^1 r_m^2}{r_n^1 t_m^2} = \alpha_{nm}$; and

$$\frac{t_n^1}{r_n^1} = \frac{t_m^2}{r_m^2}\alpha_{nm}, \text{ that is, } \rho_n^1 = \rho_m^2\alpha_{nm}.$$

Therefore, on the basis of performing uplink and downlink reciprocity calibration in the TRP to obtain $\rho_1^1$, $\rho_n^1$

, ..., and $\rho_N^1$ and $\rho_1^2$, $\rho_m^2$, and $\rho_M^2$, uplink and downlink reciprocity calibration between the TRPs is performed, to obtain a relationship between $\rho_1^1$, $\rho_n^1$, ..., and $\rho_N^1$ and $\rho_1^2$, $\rho_m^2$, and $\rho_M^2$.

It can be learned from the foregoing analysis that when the TRP 1 and the TRP 2 are located on a same physical pole/tower, because geographical locations of the TRP 1 and the TRP 2 are the same, when the TRP 1 and the TRP 2 send signals to each other, power of a received signal may be high, and may exceed power thresholds of the TRP 1 and the TRP 2 for signal processing. When the TRP 1 and the TRP 2 are located on different physical poles/towers, for example, in a scenario in which a distance between the TRP 1 and the TRP 2 is 200m and non-line-of-sight transmission (non-line-of-sight, NLOS) is performed, the TRP 1 and/or the TRP 2 may need to increase signal transmit power. Therefore, the foregoing cases impose higher requirements on hardware specifications of the TRP 1 and the TRP 2.

It may be understood that a specific structure of an execution body of the method provided in embodiments of this application is not particularly limited in the following embodiments, provided that a program that records code of the method provided in embodiments of this application can be run, to perform communication according to the method provided in embodiments of this application. For example, the execution body may be a terminal device or a functional module that is in a terminal device and that can invoke and execute a program, or the execution body may be a network device or a functional module that is in a network device and that can invoke and execute a program. The following uses only the terminal device or the network device as an example for description.

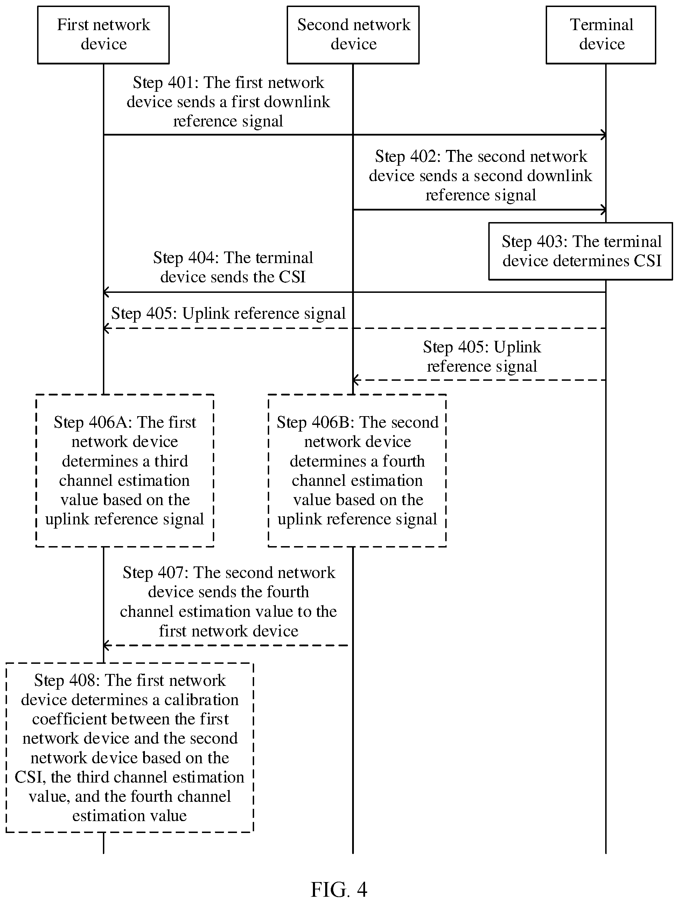

This application provides a communication method. As shown in FIG. 4, reciprocity calibration between TRPs can be implemented without limiting hardware specifications of the TRPs. The method includes the following steps.

Step 401: A first network device sends a first downlink reference signal. Correspondingly, a terminal device receives the first downlink reference signal.

Step 402: A second network device sends a second downlink reference signal. Correspondingly, the terminal device receives the second downlink reference signal.

Both the first downlink reference signal and the second downlink reference signal may be channel state information reference signals (channel state information reference signal, CSI-RS). The first downlink reference signal and the second downlink reference signal may correspond to different CSI-RS resources, or correspond to different CSI-RS ports in a same CSI-RS resource, and a QCL assumption configured for the first downlink reference signal is different from a QCL assumption configured for the second downlink reference signal.

Optionally, the first downlink reference signal is sent by using one or more transmit antennas of the first network device, and the second downlink reference signal is sent by using one or more transmit antennas of the second network device.

The first network device and the second network device may be two network devices in a CJT scenario. In other words, the first network device and the second network device are located in a coordinating cluster. The coordinating cluster is a set of network devices used by a same terminal device to perform joint transmission.

Step 403: The terminal device determines channel state information (channel state information, CSI). The CSI is determined based on a ratio of a first channel estimation value to a second channel estimation value, the first channel estimation value is determined based on the first downlink reference signal, and the second channel estimation value is determined based on the second downlink reference signal.

For example, the terminal device separately performs channel estimation based on the received first downlink reference signal and the received second downlink reference signal. The terminal device obtains, based on the first downlink reference signal, an air interface channel through which the first downlink reference signal passes, and determines the first channel estimation value. The terminal device obtains, based on the second downlink reference signal, an air interface channel through which the second downlink reference signal passes, and determines the second channel estimation value. Then, the terminal device determines the ratio of the first channel estimation value to the second channel estimation value, to obtain the CSI.

For example, the terminal device performs least square (least square, LS) on the first downlink reference signal $y_1$ based on a sequence $s_1$ of the first downlink reference signal to obtain a channel estimation value $v_1 = y_1 \times s_1^{-1}$, and further obtains the channel estimation value (that is, the first channel estimation value), for example, as shown in Formula (1), of the first downlink reference signal based on $v_1$ and a filtering and noise reduction algorithm. Similarly, LS is performed on the second downlink reference signal $y_2$ based on a sequence $s_2$ of the second downlink reference signal to obtain a channel estimation value $v_2 = y_2 \times s_2^{-1}$. Further, the channel estimation value (that is, the second channel estimation value), for example, as shown in Formula (2), of the second downlink reference signal is obtained based on $v_2$ and the filtering and noise reduction algorithm. The sequence $s_1$ of the first downlink reference signal is configured by the first network device for the terminal device, and the first downlink reference signal $y_1$ is received by

the terminal device. The sequence $s_2$ of the second downlink reference signal is configured by the first network device for the terminal device, and the first downlink reference signal $y_2$ is received by the terminal device.

It should be noted that the foregoing result is a channel estimation value obtained without considering impact of interference and noise.

For example, when the first downlink reference signal is a CSI-RS 1, and the second downlink reference signal is a CSI-RS 2, the following uses a channel estimation value of a $k^{th}$ receive antenna of the terminal device on the CSI-RS 1 and a channel estimation value of the $k^{th}$ receive antenna of the terminal device on the CSI-RS 2 as an example for description. The channel estimation value of the $k^{th}$ receive antenna of the terminal device on the CSI-RS 1 is:

$$R_{CSI-RS1} = T^1 W_1 H_1 r_k^{UE} \quad \text{Formula (1)}$$

The channel estimation value of the $k^{th}$ receive antenna of the terminal device on the CSI-RS 2 is:

$$R_{CSI-RS2} = T^2 W_2 H_2 r_k^{UE} \quad \text{Formula (2)}$$

$T^1$ and $T^2$ are respectively transmit coefficients corresponding to antennas of the first network device and antennas of the second network device, dimensions are respectively $1 \times N_{BS1}$ and $1 \times N_{BS2}$, and $N_{BS1}$ and $N_{BS2}$ are respectively antenna quantities corresponding to the first network device and the second network device. $W_1$ is an amplitude and phase weighted value between transmit antennas when the first network device sends the CSI-RS 1, or may be referred to as a beamforming operation, and represents a phase relationship between the transmit antennas. $W_1$ may be an all-1 matrix, and represents that amplitude and phase weighting is not performed when the CSI-RS 1 is sent. $W_2$ is an amplitude and phase weighted value between transmit antennas when the second network device sends the CSI-RS 2, or may be referred to as a beamforming operation, and represents a phase relationship between the transmit antennas. $W_2$ may be an all-1 matrix, and represents that amplitude and phase weighting is not performed when the CSI-RS 2 is sent. $H_1$ is a channel response through which the CSI-RS 1 passes during propagation on an air interface. An antenna at a UE end is used as an example, and a dimension of $H_1$ is $N_{BS1} \times 1$. $H_2$ is a channel response through which the CSI-RS 2 passes during propagation on an air interface. An antenna at a UE end is used as an example, and a dimension of $H_2$ is $N_{BS2} \times 1$. $r_k^{UE}$ is a receive coefficient on the $k^{th}$ receive antenna of the terminal device, and the receive coefficient includes amplitude and phase information.

Step 404: The terminal device sends the CSI.

For example, the terminal device sends the CSI to a device configured to determine a calibration coefficient between the first network device and the second network device. For example, the device configured to determine the calibration coefficient between the first network device and the second network device may be the first network device and/or the second network device, or a third network device. In addition, the terminal device may further send the CSI to a device other than the device configured to determine the calibration coefficient between the first network device and the second network device. For example, the first network device is configured to determine the calibration coefficient between the first network device and the second network device, and the terminal device sends the CSI to the first network device. Optionally, because the CSI may further include other information, the terminal device may further send the CSI to the second network device. For another example, the third network device is configured to determine the calibration coefficient between the first network device and the second network device, and the terminal device sends the CSI to the third network device. Optionally, because the CSI may further include other information, the terminal device may further send the CSI to the first network device and/or the second network device.

It should be noted that step 404 in FIG. 4 merely uses an example in which the terminal device sends the CSI to the first network device.

In conclusion, the terminal device determines the first channel estimation value based on the first downlink reference signal, determines the second channel estimation value based on the second downlink reference signal, and determines the CSI based on the ratio of the first channel estimation value to the second channel estimation value. The terminal device sends the CSI, so that the device that receives the CSI can perform reciprocity calibration between the first network device and the second network device based on the CSI, and reciprocity calibration between TRPs can be implemented without limiting hardware specifications of the TRPs.

In a first possible design, bandwidth occupied by the first downlink reference signal is $W_1$, and bandwidth occupied by the second downlink reference signal is $W_2$, where $W_1 = W_2$ or $W_1 \neq W_2$. The first channel estimation value is a channel estimation value of the bandwidth $W_1$ occupied by the first downlink reference signal, and the second channel estimation value is a channel estimation value of bandwidth $W_2$ occupied by the second downlink reference signal.

For example, in correspondence with a first possible implementation of the first channel estimation value and the second channel estimation value, the terminal device obtains an average value of channel estimation values on REs included in the bandwidth $W_1$ occupied by the first downlink reference signal, and uses the average value as the first channel estimation value. The terminal device obtains an average value of channel estimation values on REs included in the bandwidth $W_2$ occupied by the second downlink reference signal, and uses the average value as the second channel estimation value.

In a second possible design, the bandwidth $W_1$ occupied by the first downlink reference signal includes K subbands, and the bandwidth $W_2$ occupied by the second downlink reference signal includes K subbands, where K is an integer greater than or equal to 2. The first channel estimation value is a channel estimation value of a $k^{th}$ subband in the first downlink reference signal, the second channel estimation value is a channel estimation value of a $k^{th}$ subband in the second downlink reference signal, where k ranges from 1 to K, k is a positive integer, and K is an integer greater than or equal to 2. In this case, both a quantity of first channel estimation values and a quantity of second channel estimation values are K, and each subband corresponds to a group of a first channel estimation value and a second channel estimation value.

For example, in correspondence with a second possible implementation of the first channel estimation value and the second channel estimation value, for the $k^{th}$ subband, the terminal device obtains an average value of channel estimation values on REs included in the $k^{th}$ subband occupied by the first downlink reference signal, and uses the average value as the first channel estimation value. The terminal device obtains an average value of channel estimation values on REs included in the $k^{th}$ subband occupied by the second downlink reference signal, and uses the average value as the second channel estimation value, where k ranges from 1 to K.

The CSI includes amplitude quantization information and phase quantization information, and the amplitude quantization information and the phase quantization information are determined based on the ratio of the first channel estimation value to the second channel estimation value.

Bits occupied by the amplitude quantization information may be greater than or equal to 3 bits. Specifically, a possible value of an amplitude quantization value may be determined in a uniform quantization manner or a non-uniform quantization manner. For the uniform quantization manner, steps between two adjacent amplitude quantization values are equal. For example, if a range of the amplitude quantization value is (0.2, 1), and a step is 0.1, Table 1 shows a correspondence between 3-bit amplitude quantization information and the amplitude quantization value.

**Table 1**

| Amplitude quantization information (3 bits) | Amplitude quantization value |
|---|---|
| 000 | 0.2 |
| 001 | 0.3 |
| 010 | 0.4 |
| 011 | 0.5 |
| 100 | 0.6 |
| 101 | 0.7 |
| 110 | 0.8 |
| 111 | 0.9 |

For another example, a range of the amplitude quantization value may alternatively be (0.5, 1.5). The range of the amplitude quantization value is not limited in this application.

For non-uniform quantization, when a step between amplitude quantization values is close to 1, a step between amplitude quantization values is small. When the step between amplitude quantization values is in another range, the step between amplitude quantization values is large. For example, the range of the amplitude quantization value is (0.2, 1). Table 3 shows a correspondence between 3-bit amplitude quantization information and the amplitude quantization value.

**Table 2**

| Amplitude feedback information (3 bits) | Amplitude quantization value |
|---|---|
| 000 | 0.2 |

(continued)

| Amplitude feedback information (3 bits) | Amplitude quantization value |
|---|---|
| 001 | 0.4 |
| 010 | 0.6 |
| 011 | 0.8 |
| 100 | 0.85 |
| 101 | 0.9 |
| 110 | 0.95 |
| 111 | 0.98 |

Bits occupied by the phase quantization information may be greater than or equal to 5 bits, and specifically, a uniform quantization manner or a non-uniform quantization manner may be used. For example, each state bit of phase quantization may correspond to one piece of angle information Ø, and a value of Ø may be {0, 10, 20, ..., 180} or may correspond to $e^{j\emptyset\pi/180}$. The manner of determining values of the phase quantization information is similar to determining possible values of the amplitude quantization value by using the amplitude quantization information in the uniform quantization manner or the non-uniform quantization manner. Details are not described herein again.

For example, when the CSI is determined in a wideband feedback manner, the CSI includes one feedback amount, and the feedback amount corresponds to wideband feedback. In this case, the feedback amount may also be referred to as wideband CSI. Specifically, the feedback amount corresponds to the bandwidth $W_1$ occupied by the first downlink reference signal and the bandwidth $W_2$ occupied by the second downlink reference signal. The feedback amount may include amplitude quantization information P and phase quantization information $\omega$. The amplitude quantization information P and the phase quantization information $\omega$ are determined according to $\alpha_1/\alpha_2$, where $\alpha_1$ is the first channel estimation value, and $\alpha_2$ is the second channel estimation value. This corresponds to the first possible implementation of the first channel estimation value and the second channel estimation value, where P is less than or equal to 1.

For example, when the CSI is determined in a subband feedback manner, the CSI includes K feedback amounts, and each feedback amount corresponds to subband feedback. In this case, each feedback amount may also be referred to as subband CSI, and each feedback amount corresponds to one subband in the bandwidth $W_1$ occupied by the first downlink reference signal and one subband in the bandwidth $W_2$ occupied by the second downlink reference signal. Amplitude quantization information $P_k$ and phase quantization information $\omega_k$ in a $k^{th}$ feedback amount in the K feedback amounts are determined according to $\alpha_k^1/\alpha_k^2$, where $\alpha_k^1$ is the first channel estimation value, and $\alpha_k^2$ is the second channel estimation value. This corresponds to the second possible implementation of the first channel estimation value and the second channel estimation value, where $P_k$ is less than or equal to 1, and k ranges from 1 to K.

It should be noted that the bandwidth $W_1$ occupied by the first downlink reference signal includes $K_1$ subcarriers in total, and the first downlink reference signal may occupy $K_{11}$ subcarriers in the $K_1$ subcarriers, where $K_{11} \leq K_1$. For channel estimation of the first downlink reference signal, $K_1$ channel estimation values corresponding to the $K_1$ subcarriers may be determined, or one channel estimation value corresponding to the $K_1$ subcarriers may be directly determined. In correspondence with the foregoing broadband feedback manner, $M_1$ channel estimation values corresponding to the $K_1$ subcarriers may be further determined, and $M_1$ is a quantity of subbands corresponding to CSI reporting, and corresponds to the foregoing subband feedback manner. The bandwidth $W_2$ occupied by the second downlink reference signal includes $K_2$ subcarriers in total, and the second downlink reference signal may occupy $K_{22}$ subcarriers in the $K_2$ subcarriers, where $K_{22} \leq K_2$. For channel estimation of the second downlink reference signal, $K_2$ channel estimation values corresponding to the $K_2$ subcarriers may be determined, or one channel estimation value corresponding to the $K_2$ subcarriers may be directly determined. In correspondence with the foregoing broadband feedback manner, $M_2$ channel estimation values corresponding to the $K_2$ subcarriers may be further determined, and $M_2$ is a quantity of subbands corresponding to CSI reporting, and corresponds to the foregoing subband feedback manner. $M_1$ and $M_2$ may be the same. $K_1$, $K_{11}$, $K_2$, $K_{22}$, $M_1$ and $M_2$ are positive integers.

For example, the terminal device determines one channel estimation value based on the $K_1$ channel estimation values corresponding to the $K_1$ subcarriers corresponding to the first downlink reference signal, determines one channel estimation value based on the $K_2$ channel estimation values corresponding to the $K_2$ subcarriers corresponding to the second downlink reference signal, and determines one piece of wideband CSI based on the two channel estimation values. In other words, the CSI includes only one piece of amplitude quantization information and one piece of phase quantization information, and corresponds to the bandwidth $W_1$ occupied by the first downlink reference signal and the

bandwidth $W_2$ occupied by the second downlink reference signal.

For example, the terminal device determines the $M_1$ channel estimation values based on the $K_1$ channel estimation values corresponding to the $K_1$ subcarriers corresponding to the first downlink reference signal, determines the $M_1$ channel estimation values based on the $K_2$ channel estimation values corresponding to the $K_2$ subcarriers corresponding to the second downlink reference signal, and may determine one piece of subband CSI for each subband. A total of $M_1$ pieces of subband CSI may be determined, that is, the CSI includes $M_1$ pieces of subband CSI. Each piece of subband CSI includes one piece of amplitude quantization information and one piece of phase quantization information, the $M_1$ pieces of subband CSI separately correspond to $M_1$ subbands of the bandwidth $W_1$ occupied by the first downlink reference signal and $M_2$ subbands of the bandwidth $W_2$ occupied by the second downlink reference signal, and $M_1 = M_2$.

It should be noted that, when determining the first channel estimation value and the second channel estimation value, the terminal device needs to first determine, based on preset information, whether the first channel estimation value is used as a denominator or the second channel estimation value is used as a denominator to participate in a ratio operation. For example, when an index value of the first downlink reference signal is less than an index value of the second downlink reference signal, the second channel estimation value is used as a denominator, and the first channel estimation value is used as a numerator. When the index value of the first downlink reference signal is greater than or equal to the index value of the second downlink reference signal, the first channel estimation value is used as a denominator, and the second channel estimation value is used as a numerator. The following uses only an example in which the second channel estimation value is used as the denominator and the first channel estimation value is used as the numerator for description. It may be understood that the terminal device may alternatively use another solution to determine whether the first channel estimation value is used as the denominator or the second channel estimation value is used as the denominator. This is not limited in this application. In this manner, it may be agreed in advance that a channel estimation value with a large amplitude value is used as the denominator and a channel estimation value with a small amplitude value is used as the numerator, or a channel estimation value with a small amplitude value is used as the denominator and a channel estimation value with a large amplitude value is used as the numerator. Therefore, amplitude values are centralized and easy to quantize.

For example, a channel estimation value corresponding to the CSI-RS 1 is the numerator, and a channel estimation value corresponding to the CSI-RS 2 is the denominator. The terminal device may determine a ratio of $R_{CSI-RS1}$ to $R_{CSI-RS2}$ according to Formula (1) and Formula (2).

For example,

$$\gamma = \frac{R_{CSI-RS1}}{R_{CSI-RS2}} = \frac{T^1 W_1 H_1 r_k^{UE}}{T^2 W_2 H_2 r_k^{UE}} = \frac{T^1 W_1 H_1}{T^2 W_2 H_2} \ \text{Formula (3)}$$

In addition, to implement accuracy of reciprocity calibration between the first network device and the second network device, when receiving the first downlink reference signal and the second downlink reference signal, the terminal device needs to meet but is not limited to at least one of the following constraint rules.

Constraint rule 1: Receive antennas, receive antenna ports, or receive beams of the first downlink reference signal and the second downlink reference signal are the same, so that the first downlink signal and the second downlink signal have a same multiplication coefficient on a terminal device side.

Constraint rule 2: It is assumed that the terminal device receives the first downlink reference signal at a first moment, and the terminal device receives the second downlink reference signal at a second moment. A time interval Δt1 between the first moment and the second moment satisfies Δt1≤T1, where T1≥0, and T1 is a preset value or a value indicated by capability indication information reported by the terminal device.

For example, T1 may be determined based on channel coherence time. In this manner, it can be ensured that the receive multiplication coefficients used when the terminal device receives the first downlink reference signal and the second downlink reference signal are consistent, to ensure the accurate calibration coefficient.

For example, the terminal device may send the capability indication information. The capability indication information may indicate the first duration T1, and the first duration is used to assist a base station in determining a value of Δt1. Further, based on the first duration T1 indicated by the capability indication information, the first network device determines a sending moment of the first downlink reference signal, and the second network device determines a sending moment of the second downlink reference signal, so that the time interval Δt1 between the first moment and the second moment satisfies Δt1≤T1, where T1 is the first duration.

Constraint rule 3: An error between a phase value $\varphi_1$ corresponding to a specific receive antenna used by the terminal device to receive the first downlink reference signal and a phase value $\varphi_2$ corresponding to a specific receive antenna used by the terminal device to receive the second downlink reference signal satisfies $|\varphi_1 - \varphi_2| \leq \partial$, where $\partial$ is a preset value greater than 0. Alternatively, an error between a phase value $\varphi_1$ corresponding to a specific receive antenna port used by the terminal device to receive the first downlink reference signal and a phase value $\varphi_2$ corresponding

to a specific receive antenna port used by the terminal device to receive the second downlink reference signal satisfies $|\varphi_1 - \varphi_2| \leq \partial$, where $\partial$ is a preset value greater than 0. Alternatively, an error between a phase value $\varphi_1$ corresponding to a specific receive beam used by the terminal device to receive the first downlink reference signal and a phase value $\varphi_2$ corresponding to a specific receive beam used by the terminal device to receive the second downlink reference signal satisfies $|\varphi_1 - \varphi_2| \leq \partial$, where $\partial$ is a preset value greater than 0.

It may be understood that the specific receive antenna may be one or more of all receive antennas of the terminal device. The specific receive antenna port may be one or more of all receive antenna ports of the terminal device. The specific receive beam may be one or more of all receive beams of the terminal device.

$\varphi_1$ is a phase in which the first downlink reference signal is received and modulated by the receive antenna, and $\varphi_2$ is a phase in which the second downlink reference signal is received and modulated by the receive antenna.

For example, the capability indication information sent by the terminal device may indicate that an error of phase values of two downlink reference signals that can be received by a same receive antenna by the terminal device is less than or equal to maximum duration, minimum duration, or average duration of $\partial$. Further, based on the maximum duration, the minimum duration, or the average duration, the first network device may determine the sending moment of the first downlink reference signal, and the second network device may determine the sending moment of the second downlink reference signal, so that the error between $\varphi_1$ and $\varphi_2$ satisfies $|\varphi_1 - \varphi_2| \leq \partial$.

In addition, the constraint rule 3 may be combined with the constraint rule 2, that is, the sending moment of the first downlink reference signal determined by the first network device and the sending moment of the second downlink reference signal determined by the second network device may also implement that the time interval $\Delta t1$ between the first moment and the second moment satisfies $\Delta t1 \leq T1$.

Further, optionally, interaction between the terminal device and the first network device and/or the second network device may further include the following steps.

Step 405: The terminal device sends an uplink reference signal to the first network device and the second network device. Correspondingly, the first network device receives the uplink reference signal, and the second network device receives the uplink reference signal.

The uplink reference signal may be a sounding reference signal (sounding reference signal, SRS).

To implement accuracy of reciprocity calibration between the first network device and the second network device, that the terminal device sends the uplink reference signal to the first network device and the second network device may meet but is not limited to at least one of the following constraint rules.

Constraint rule A: Bandwidth occupied by the uplink reference signal is the same as the bandwidth $W_1$ occupied by the first downlink reference signal, so that it can be ensured that the channel through which the first downlink reference signal passes and a channel through which the uplink reference signal passes remain unchanged.

The bandwidth occupied by the uplink reference signal is the same as the bandwidth $W_2$ occupied by the second downlink reference signal, so that it can be ensured that the channel through which the second downlink reference signal passes and the channel through which the uplink reference signal passes remain unchanged.

In this case, the bandwidth $W_1$ occupied by the first downlink reference signal may also be the same as the bandwidth $W_2$ occupied by the second downlink reference signal, and $W_1 = W_2$.

Constraint rule B: A transmit antenna corresponding to the uplink reference signal is the same as a receive antenna corresponding to the first downlink reference signal. Therefore, impact of receiving and sending processing on calibration precision on the terminal device side can be eliminated, to improve calibration precision.

Constraint rule C: The terminal device sends the uplink reference signal to the first network device and the second network device at a third moment. A time interval $\Delta t2$ between the third moment and the first moment satisfies $\Delta t2 \leq T2$, where $T2 \geq 0$, and $T2$ is a preset value or a value indicated by the capability indication information reported by the terminal device; and/or a time interval $\Delta t3$ between the third moment and the second moment satisfies $\Delta t3 \leq T3$, where $T3 \geq 0$, and $T3$ is a preset value or a value indicated by the capability indication information reported by the terminal device.

Similar to the constraint rule 2, the terminal device may send the capability indication information, and the capability indication information may indicate duration. Further, the network device determines a sending moment of the uplink signal, that is, the third moment, based on the duration indicated by the capability indication information, so that the time interval $\Delta t2$ between the third moment and the first moment satisfies $\Delta t2 \leq T2$. For example, the duration indicated by the capability indication information is $T2$, further, it can be ensured that the channel through which the first downlink reference signal passes and the channel through which the uplink reference signal passes remain unchanged, and/or the time interval $\Delta t3$ between the third moment and the second moment satisfies $\Delta t3 \leq T3$, where $T3 \geq 0$. For example, the duration indicated by the capability indication information is $T3$, so that it can be ensured that the channel through which the second downlink reference signal passes and the channel through which the uplink reference signal passes remain unchanged.

In addition, the terminal device may further send a first uplink reference signal to the first network device, and send a second uplink reference signal to the second network device. To implement reciprocity calibration between the first network device and the second network device, the terminal device sends the first uplink reference signal to the first network device, and sends the second uplink reference signal to the second network device. For a constraint rule that needs to be met, refer to the foregoing constraint rules. Details are not described herein again.

Step 406A: The first network device determines a third channel estimation value based on the uplink reference signal, where the third channel estimation value is a first channel estimation value of the uplink reference signal.

A receive antenna used by the first network device to receive the uplink reference signal is the same as a transmit antenna used by the first network device to send the first downlink reference signal. Therefore, impact of receiving and sending processing on calibration precision on the first network device side can be eliminated, and calibration precision can be improved.

Step 406B: The second network device determines a fourth channel estimation value based on the uplink reference signal, where the fourth channel estimation value is a second channel estimation value of the uplink reference signal.

A receive antenna used by the second network device to receive the uplink reference signal is the same as a transmit antenna used by the second network device to send the second downlink reference signal. Therefore, impact of receiving and sending processing on calibration precision on the second network device side can be eliminated, and calibration precision can be improved.

For example, when the uplink reference signal is an SRS, a $k^{th}$ transmit antenna of the terminal device sends the SRS, and a channel estimation value of the SRS received by the first network device is:

$$ R^1_{SRS} = R^1 W_1 H_1 t^{UE}_k \quad \text{Formula (4)} $$

A channel estimation value of the SRS received by the second network device is:

$$ R^2_{SRS} = R^2 W_2 H_2 t^{UE}_k \quad \text{Formula (5)} $$

$R^1$ and $R^2$ are respectively receive coefficients corresponding to antennas of the first network device and antennas of the second network device, dimensions are respectively $1 \times N_{BS1}$ and $1 \times N_{BS2}$, and $N_{BS1}$ and $N_{BS2}$ are respectively antenna quantities corresponding to the first network device and the second network device. $W_2$ used by the second network device to send the CSI-RS 2 is used to receive the SRS. $W_1$ used by the first network device to send the CSI-RS 1 is used to receive the SRS. $t^{UE}_k$ is a transmit coefficient on the $k^{th}$ transmit antenna of the terminal device, and the transmit coefficient includes amplitude and phase information.

In correspondence with the first possible implementation of the first channel estimation value and the second channel estimation value, the first network device obtains an average value of channel estimation values on REs included in the bandwidth occupied by the uplink reference signal, and uses the average value as the third channel estimation value. The second network device obtains the average value of the channel estimation values on the REs included in the bandwidth occupied by the uplink reference signal, and uses the average value as the fourth channel estimation value. Therefore, when the first channel estimation value is the channel estimation value of the bandwidth $W_1$ occupied by the first downlink reference signal, and the second channel estimation value is the channel estimation value of the bandwidth $W_2$ occupied by the second downlink reference signal, the third channel estimation value is a first channel estimation value of the bandwidth occupied by the uplink reference signal, and the fourth channel estimation value is a second channel estimation value of the bandwidth occupied by the uplink reference signal. For example, the first channel estimation value is denoted as $\alpha_1$, the second channel estimation value is denoted as $\alpha_2$, the third channel estimation value is denoted as $\beta_1$, and the fourth channel estimation value is denoted as $\beta_2$.

In correspondence with the second possible implementation of the first channel estimation value and the second channel estimation value, for the $k^{th}$ subband, the first network device obtains an average value of channel estimation values on REs included in a $k^{th}$ subband occupied by the uplink reference signal, and uses the average value as the third channel estimation value. The first network device obtains the average value of the channel estimation values on the REs included in the $k^{th}$ subband occupied by the uplink reference signal, and uses the average value as the fourth channel estimation value. Therefore, when the first channel estimation value is the channel estimation value of the $k^{th}$ subband in the first downlink reference signal, and the second channel estimation value is the channel estimation value of the $k^{th}$ subband in the second downlink reference signal, the third channel estimation value is a first channel estimation value of the $k^{th}$ subband in the uplink reference signal, and the fourth channel estimation value is a second channel estimation value of the $k^{th}$ subband in the uplink reference signal. For example, the first channel estimation value is denoted as $\alpha^1_k$, the second channel estimation value is denoted as $\alpha^2_k$, the third channel estimation value is denoted

as $\beta_k^1$, and the fourth channel estimation value is denoted as $\beta_k^2$.

It should be noted that only an example in which the first network device is used to determine the calibration coefficient between the first network device and the second network device is used below for description. It may be understood that a specific procedure in which the second network device is used to determine the calibration coefficient between the first network device and the second network device is similar to the following procedure.

Step 407: The second network device sends the fourth channel estimation value to the first network device.

Step 408: The first network device determines the calibration coefficient between the first network device and the second network device based on the CSI, the third channel estimation value, and the fourth channel estimation value.

The calibration coefficient between the first network device and the second network device is a ratio of a first ratio to a second ratio, the first ratio is the ratio of the first channel estimation value to the second channel estimation value, and the second ratio is a ratio of the third channel estimation value to the fourth channel estimation value.

When the CSI is determined in the wideband feedback manner, $\gamma = \dfrac{\alpha_1}{\alpha_2}$, and $\delta = \dfrac{\beta_1}{\beta_2}$, where $\gamma$ is the first ratio, $\delta$ is the second ratio, and the calibration coefficient is $\dfrac{\gamma}{\delta} = \dfrac{\alpha_1 \beta_2}{\alpha_2 \beta_1}$.

When the CSI is determined in the subband feedback manner, for the k$^{th}$ subband, $\gamma_k = \dfrac{\alpha_k^1}{\alpha_k^2}$, and $\delta_k = \dfrac{\beta_k^1}{\beta_k^2}$, where $\gamma_k$ is the first ratio, $\delta_k$ is the second ratio, and the calibration coefficient is $\dfrac{\gamma_k}{\delta_k} = \dfrac{\alpha_k^1 \beta_k^2}{\alpha_k^2 \beta_k^1}$.

For example, the first network device may determine a ratio of $R_{SRS}^1$ to $R_{SRS}^2$ according to Formula (4) and Formula (5).

For example,

$$\delta = \frac{R_{SRS}^1}{R_{SRS}^2} = \frac{R^1 W_1 H_1 t_k^{UE}}{R^2 W_2 H_2 * t_k^{UE}} = \frac{R^1 W_1 H_1}{R^2 W_2 H_2} \quad \text{Formula (6)}$$

Further, it is assumed that Formula (1), Formula (2), Formula (4), and Formula (5) are for a same RE, a corresponding calibration coefficient obtained according to Formula (3) and Formula (6) is:

$$\frac{\gamma}{\delta} = \frac{T^1 W_1 H_1}{T^2 W_2 H_2} * \frac{R^2 W_2 H_2}{R^1 W_1 H_1} = \frac{(T^1 R^2)}{(T^2 R^1)} \quad \text{Formula (7)}$$

Further, Formula (7) may also be written as:

$$\frac{\gamma}{\delta} = \frac{\rho_n^1}{\rho_m^2} = \alpha_{nm} \quad \text{Formula (8)}$$

It is assumed that the first network device has completed reciprocity calibration in the first network device, that is, $\rho_n^1$ is obtained, where $\rho_n^1 = \dfrac{T^1}{R^1}$. The second network device has completed reciprocity calibration in the second network device, that is, $\rho_m^2$ is obtained, where $\rho_m^2 = \dfrac{T^2}{R^2}$.

In addition, it may be understood that, in an implementation, after step 406A and step 406B, if the third network device is a device configured to determine the calibration coefficient between the first network device and the second network device, the first network device sends the third channel estimation value to the third network device, the second network device sends the fourth channel estimation value to the third network device, and the third network device determines the calibration coefficient between the first network device and the second network device based on the CSI, the third channel estimation value, and the fourth channel estimation value.

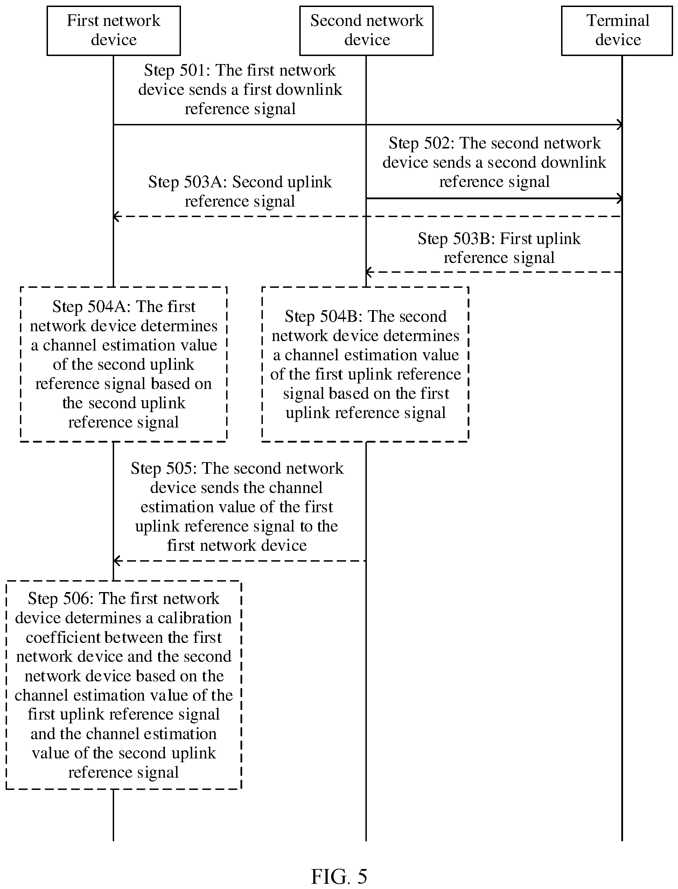

This application further provides a communication method, to implement reciprocity calibration between TRPs without limiting hardware specifications of the TRPs. As shown in FIG. 5, the method includes the following steps.

For step 501, refer to step 401.

For step 502, refer to step 402.

To implement reciprocity calibration between a first network device and a second network device, for a constraint rule that needs to be met when a terminal device receives a first downlink reference signal and a second downlink reference signal, refer to the foregoing related descriptions.

Step 503A: The terminal device sends a first uplink reference signal to the second network device.

Optionally, the first uplink reference signal may be sent by using one or more transmit antennas of the terminal device.

Optionally, a transmit antenna of the first uplink reference signal is the same as a receive antenna of the first downlink reference signal.

The terminal device generates a sequence of the first uplink reference signal, and the sequence of the first uplink reference signal is determined based on a channel estimation value of the first downlink reference signal.

The first uplink reference signal may be an SRS.

The terminal device may perform channel estimation based on the received first downlink signal, to determine the channel estimation value of the first downlink reference signal. For example, when the first downlink reference signal is a CSI-RS 1, for a channel estimation value of a $k^{th}$ receive antenna of the terminal device on the CSI-RS 1, refer to Formula (1).

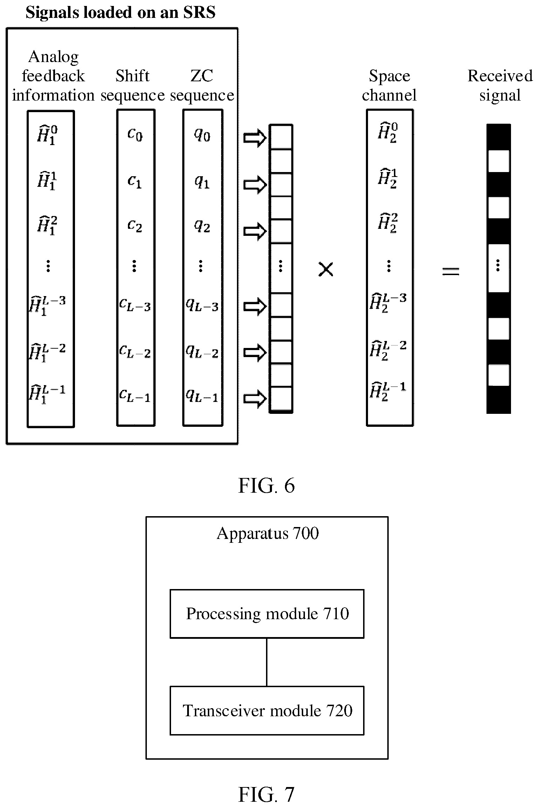

Further, the terminal device loads the channel estimation value of the first downlink reference signal to the first uplink reference signal. For example, as shown in FIG. 6, when sending the first uplink reference signal, the terminal device needs to map a ZC sequence and a corresponding cyclic shift sequence to a subcarrier on which the first uplink reference signal is located, perform dot multiplication on each subcarrier by the channel estimation value of the first downlink reference signal, and then send the first uplink reference signal.

A sequence in an $n_1^{th}$ frequency domain unit corresponding to the first uplink reference signal is determined based on a channel estimation value of an $n_1^{th}$ frequency domain unit corresponding to the first downlink reference signal, where $n_1$ ranges from 1 to $N_1$, $n_1$ and $N_1$ are positive integers, and $N_1$ is a quantity of frequency domain units occupied by the first uplink reference signal.

For example, the sequence of the first uplink reference signal is $r_1(m_1) = e^{j\alpha_1 m_1} \bar{r}_1(m_1) \widehat{H}_{m_1}^1$, where $\widehat{H}_{m_1}^1$ is determined based on a channel estimation value of an $m_1^{th}$ RE corresponding to the first downlink reference signal, $\alpha_1$ and $\bar{r}_1$ are respectively a cyclic shift and a basic sequence of the first uplink reference signal, $m_1 = \{0, 1, ..., M_1\}$, $M_1$ is a positive integer, and $M_1$ is a quantity of REs occupied by the first uplink reference signal.

To implement accuracy of reciprocity calibration between the first network device and the second network device, when the terminal device sends the first uplink reference signal to the second network device, at least one of the following constraint rules needs to be met but is not limited to:

Constraint rule a1: A transmit antenna corresponding to the first uplink reference signal is the same as a receive antenna corresponding to the first downlink reference signal. Therefore, impact of receiving and sending processing on calibration precision on the terminal device side can be eliminated, to improve calibration precision.

Constraint rule b1: The terminal device sends the first uplink reference signal to the second network device at a third moment. A time interval Δt4 between a first moment and the third moment satisfies Δt4≤T4, where T4≥0, and T4 is a preset value or is a value indicated by capability indication information reported by the terminal device. Further, it can be ensured that a channel through which the second downlink reference signal passes and a channel through which the first uplink reference signal passes remain unchanged.

Constraint rule c1: A frequency domain unit occupied by a second uplink reference signal is the same as a frequency domain unit occupied by the second downlink reference signal.

The frequency domain unit herein may include at least one RE, at least one RB, or at least one RB set, or the frequency domain unit herein is a full band, that is, bandwidth occupied by the second downlink reference signal is the same as bandwidth occupied by the second uplink reference signal.

Step 503B: The terminal device sends the second uplink reference signal to the first network device.

Optionally, the second uplink reference signal may be sent by using one or more transmit antennas of the terminal device.

Optionally, a transmit antenna of the second uplink reference signal is the same as a receive antenna of the second downlink reference signal.

Optionally, the first uplink reference signal and the second uplink reference signal use a same transmit antenna.

The terminal device generates a sequence of the second uplink reference signal, and the sequence of the second uplink reference signal is determined based on a channel estimation value of the second downlink reference signal.

The terminal device performs channel estimation based on the received second downlink signal, to determine the channel estimation value of the second downlink reference signal. For example, when the second downlink reference signal is a CSI-RS 2, for the channel estimation value of the $k^{th}$ receive antenna of the terminal device on the CSI-RS 1, refer to Formula (2).

Further, the terminal device loads the channel estimation value of the second downlink reference signal to the second uplink reference signal.

Similarly, to implement accuracy of reciprocity calibration between the first network device and the second network device, when the terminal device sends the second uplink reference signal to the first network device, at least one of the following constraint rules needs to be met but is not limited to:

Constraint rule a2: A transmit antenna corresponding to the second uplink reference signal is the same as a receive antenna corresponding to the second downlink reference signal. Therefore, impact of receiving and sending processing on calibration precision on the terminal device side can be eliminated, to improve calibration precision.

Constraint rule b2: The terminal device sends the second uplink reference signal to the first network device at a fourth moment. A time interval $\Delta t5$ between the second moment and the fourth moment satisfies $\Delta t5 \leq T5$, where $T5 \geq 0$, and T5 is a preset value or is a value indicated by the capability indication information reported by the terminal device. Further, it can be ensured that a channel through which the first downlink reference signal passes and a channel through which the second uplink reference signal passes remain unchanged.

Constraint rule c2: A frequency domain unit occupied by the first uplink reference signal is the same as a frequency domain unit occupied by the first downlink reference signal.

The frequency domain unit herein may include at least one RE, at least one RB, or at least one RB set, or the frequency domain unit herein is a full band, that is, bandwidth occupied by the first downlink reference signal is the same as bandwidth occupied by the first uplink reference signal.

A sequence in an $n_2^{th}$ frequency domain unit corresponding to the second uplink reference signal is determined based on a channel estimation value of an $n_2^{th}$ frequency domain unit corresponding to the second downlink reference signal, where $n_2$ ranges from 1 to $N_2$, $n_2$ and $N_2$ are positive integers, and $N_2$ is a quantity of frequency domain units occupied by the second uplink reference signal.

For example, the sequence of the second uplink reference signal is $r_2(m_2) = e^{j\alpha_2 m_2} \bar{r}_2(m_2) \hat{H}_{m_2}^2$, where $\hat{H}_{m_2}^2$ is determined based on a channel estimation value of an $m_2^{th}$ RE corresponding to the second downlink reference signal, $\alpha_2$ and $\bar{r}_2$ are respectively a cyclic shift and a basic sequence of the second uplink reference signal, $m_2 = \{0, 1, ..., M_2\}$, $M_2$ is a positive integer, and $M_2$ is a quantity of REs occupied by the second uplink reference signal.

It may be understood that the terminal device may simultaneously send the first uplink reference signal and the second uplink reference signal, and the transmit antenna used to send the first uplink reference signal is the same as the transmit antenna used to send the second uplink reference signal, to ensure that the second uplink signal and the second uplink signal pass through a same multiplication coefficient on the terminal device side.

In conclusion, the terminal device determines the sequence of the first uplink reference signal based on the channel estimation value of the first downlink reference signal, and determines the sequence of the second uplink reference signal based on the channel estimation value of the second downlink reference signal. The terminal device sends the first uplink reference signal to the second network device, and sends the second uplink reference signal to the first network device. Further, the second network device that receives the first uplink reference signal may determine a channel estimation value of the first uplink reference signal, and the first network device that receives the second uplink reference signal may determine a channel estimation value of the second uplink reference signal, reciprocity calibration between the first network device and the second network device is implemented by using the channel estimation value of the first uplink reference signal and the channel estimation value of the second uplink reference signal, and current hardware specifications of the first network device and the second network device do not need to be changed.

Further, optionally, interaction between the terminal device and the first network device and/or the second network device may further include the following steps.

Step 504A: The first network device determines the channel estimation value of the second uplink reference signal based on the second uplink reference signal.

A receive antenna corresponding to the second uplink reference signal is the same as a transmit antenna corresponding to the first downlink reference signal. Therefore, impact of receiving and sending processing on calibration precision on the first network device side can be eliminated, and calibration precision can be improved.

For example, it is assumed that the second uplink reference signal is an SRS 2, a $k^{th}$ transmit antenna of the terminal device sends the SRS 2, and a channel estimation value determined by the first network device based on the SRS 2 is:

$$p_2 = (T^2 W_2) H_2 r_k^{UE} (R^1 W_1) H_1 t_k^{UE} \quad \text{Formula (9)}$$

Step 504B: The second network device determines the channel estimation value of the first uplink reference signal based on the first uplink reference signal.

A receive antenna corresponding to the first uplink reference signal is the same as a transmit antenna corresponding to the second downlink reference signal.

For example, it is assumed that the first uplink reference signal is an SRS 1, the $k^{th}$ transmit antenna of the terminal device sends the SRS 1, and a channel estimation value determined by the second network device based on the SRS 1 is:

$$p_1 = (T^1 W_1) H_1 r_k^{UE} (R^2 W_2) H_2 t_k^{UE} \quad \text{Formula (10)}$$

For parameters in Formula (9) and Formula (10), refer to explanations and descriptions of the parameters in Formula (1) to Formula (8).

It should be noted that only an example in which the first network device is used to determine a calibration coefficient between the first network device and the second network device is used below for description. It may be understood that a specific procedure in which the second network device is used to determine the calibration coefficient between the first network device and the second network device is similar to the following procedure.

Step 505: The second network device sends the channel estimation value of the first uplink reference signal to the first network device.

Step 506: The first network device determines the calibration coefficient between the first network device and the second network device based on the channel estimation value of the second uplink reference signal and the channel estimation value of the first uplink reference signal.

The calibration coefficient is a ratio of the channel estimation value of the second uplink reference signal to the channel estimation value of the first uplink reference signal.

For example, the channel estimation value of the second uplink reference signal is a channel estimation value in an $n^{th}$ frequency domain unit corresponding to the second uplink reference signal, and the channel estimation value of the first downlink reference signal is a channel estimation value in an $n^{th}$ frequency domain unit corresponding to the first uplink reference signal, where N is a quantity of frequency domain units occupied by the first uplink reference signal, n ranges from 1 to N, and n and N are positive integers. The frequency domain unit includes at least one RE.

For example, it is assumed that Formula (1), Formula (2), Formula (9), and Formula (10) are for a same RE, and a corresponding calibration coefficient obtained according to Formula (9) and Formula (10) is:

$$\frac{p_1}{p_2} = \frac{(T^1 W_1) H_1 r_k^{UE} (R^2 W_2) H_2 t_k^{UE}}{(T^2 W_2) H_2 r_k^{UE} (R^1 W_1) H_1 t_k^{UE}}$$

$$= \frac{(T^1 R^2)}{(T^2 R^1)} \quad \text{Formula (11)}$$

Further, Formula (11) may also be written as:

$$\frac{p_1}{p_2} = \frac{\rho_n^1}{\rho_m^2} = \alpha_{nm} \quad \text{Formula (12)}$$

It is assumed that the first network device has completed reciprocity calibration in the first network device, that is, $\rho_n^1$ is obtained, where $\rho_n^1 = \frac{T^1}{R^1}$. The second network device has completed reciprocity calibration in the second network device, that is, $\rho_m^2$ is obtained, where

$$\rho_m^2 = \frac{T^2}{R^2}.$$

It may be understood that when the first network device performs calibration by using the second network device as a reference, the calibration coefficient is shown in Formula (11). When the first network device performs calibration by using the first network device as a reference, the calibration coefficient is $\dfrac{p_2}{p_1}$ .

In addition, it may be understood that, in an implementation, after step 504A and step 504B, if a third network device is a device configured to determine the calibration coefficient between the first network device and the second network device, the first network device sends the channel estimation value of the second uplink reference signal to the third network device, the second network device sends the channel estimation value of the first uplink reference signal to the third network device, and the third network device determines the calibration coefficient between the first network device and the second network device based on the channel estimation value of the second uplink reference signal and the channel estimation value of the first uplink reference signal.

FIG. 7 is a possible example block diagram of a communication apparatus according to an embodiment of this application. The apparatus 700 includes a transceiver module 720 and a processing module 710. The transceiver module 720 may include a receiving unit and a sending unit. The processing module 710 is configured to control and manage an action of the apparatus 700. The transceiver module 720 is configured to support the apparatus 700 in communicating with another network entity. Optionally, the apparatus 700 may further include a storage unit. The storage unit is configured to store program code and data of the apparatus 700.

Optionally, each module in the apparatus 700 may be implemented by using software.

Optionally, the processing module 710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The controller/processor may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver module 720 may be a communication interface, a transceiver, a transceiver circuit, or the like. The communication interface is a general term. In a specific implementation, the communication interface may include a plurality of interfaces, and the storage unit may be a memory.

When the apparatus 700 is a first network device or a chip in a first network device, the processing module 710 in the apparatus 700 may support the apparatus 700 in performing actions of the first network device in the foregoing method examples.

The transceiver module 720 may support the apparatus 700 in communicating with a terminal device or another network device.

In a possible implementation, the processing module 710 invokes the transceiver module 720 to: send a first downlink reference signal; receive CSI, where the CSI is determined based on a ratio of a first channel estimation value to a second channel estimation value, the first channel estimation value corresponds to the first downlink reference signal, the second channel estimation value corresponds to a second downlink reference signal, and the second downlink reference signal corresponds to a second network device; and receive an uplink reference signal.

In a possible implementation, the processing module 710 invokes the transceiver module 720 to: send a first downlink reference signal; receive a second uplink reference signal, where a sequence of the second uplink reference signal is determined based on a channel estimation value of a second downlink reference signal, the second downlink reference signal is related to a second network device, and the first network device determines a second channel estimation value based on the second uplink reference signal; and send the second channel estimation value to the second network device; or receive a first channel estimation value sent by the second network device, where the first channel estimation value is determined based on a first uplink reference signal, and a sequence of the first uplink reference signal is determined based on a channel estimation value of the first downlink reference signal.

It should be understood that the apparatus 700 according to this embodiment of this application may correspond to the first network device in the foregoing method embodiments, and operations and/or functions of the modules in the apparatus 700 are separately used to implement corresponding steps of the method of the first network device in the foregoing method embodiments. Therefore, beneficial effect in the foregoing method embodiments can also be implemented. For brevity, details are not described herein again.

When the apparatus 700 is a terminal device or a chip in a terminal device, the processing module 710 in the apparatus 700 may support the apparatus 700 in performing actions of the terminal device in the foregoing method examples.

The transceiver module 720 may support the apparatus 700 in communicating with the first network device and the second network device.

In a possible implementation, the transceiver module 720 is configured to: receive the first downlink reference signal from the first network device; and receive the second downlink reference signal from the second network device.

The processing module 710 is configured to determine channel state information CSI. The CSI is determined based on a ratio of the first channel estimation value to the second channel estimation value. The first channel estimation value is determined based on the first downlink reference signal, and the second channel estimation value is determined based on the second downlink reference signal.

The transceiver module 720 is configured to send the CSI.

In a possible implementation, the transceiver module 720 is configured to: receive the first downlink reference signal from the first network device; and receive the second downlink reference signal from the second network device.

The processing module 710 is configured to generate the sequence of the first uplink reference signal and the sequence of the second uplink reference signal. The sequence of the first uplink reference signal is determined based on the channel estimation value of the first downlink reference signal, and the sequence of the second uplink reference signal is determined based on the channel estimation value of the second downlink reference signal.

The transceiver module 720 is configured to send the first uplink reference signal to the second network device, and send the second uplink reference signal to the first network device.

It should be understood that the apparatus 700 according to this embodiment of this application may correspond to the terminal device in the foregoing method embodiments, and operations and/or functions of the modules in the apparatus 700 are separately used to implement corresponding steps of the method of the terminal device in the foregoing method embodiments. Therefore, beneficial effect in the foregoing method embodiments can also be implemented. For brevity, details are not described herein again.

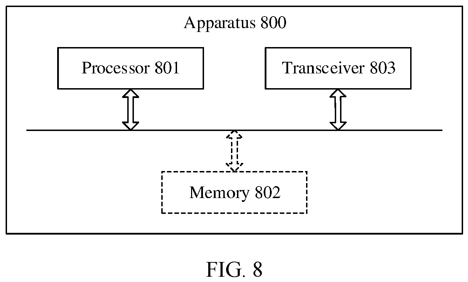

FIG. 8 is a diagram of a structure of a communication apparatus 800 according to an embodiment of this application. As shown in FIG. 8, the apparatus 800 includes a processor 801.

When the apparatus 800 is a first network device or a chip in a first network device, in a possible implementation, the processor 801 is configured to invoke an interface to perform the following actions:

sending a first downlink reference signal; receiving CSI, where the CSI is determined based on a ratio of a first channel estimation value to a second channel estimation value, the first channel estimation value corresponds to the first downlink reference signal, the second channel estimation value corresponds to a second downlink reference signal, and the second downlink reference signal corresponds to a second network device; and receiving an uplink reference signal.

When the apparatus 800 is a first network device or a chip in a first network device, in a possible implementation, the processor 801 is configured to invoke an interface to perform the following actions:

sending a first downlink reference signal; receiving a second uplink reference signal, where a sequence of the second uplink reference signal is determined based on a channel estimation value of a second downlink reference signal, the second downlink reference signal is related to a second network device, and the first network device determines a second channel estimation value based on the second uplink reference signal; and sending the second channel estimation value to the second network device; or receiving a first channel estimation value sent by the second network device, where the first channel estimation value is determined based on a first uplink reference signal, and a sequence of the first uplink reference signal is determined based on a channel estimation value of the first downlink reference signal.

It should be understood that the apparatus 800 may be further configured to perform other steps and/or operations on a first network device side in the foregoing embodiments. For brevity, details are not described herein.

When the apparatus 800 is a terminal device or a chip in a terminal device, in a possible implementation, the processor 801 is configured to invoke an interface to perform the following actions:

receiving a first downlink reference signal from a first network device; receiving a second downlink reference signal from a second network device; determining channel state information CSI, where the CSI is determined based on a ratio of a first channel estimation value to a second channel estimation value, the first channel estimation value is determined based on the first downlink reference signal, and the second channel estimation value is determined based on the second downlink reference signal; and sending the CSI.

When the apparatus 800 is a terminal device or a chip in a terminal device, in a possible implementation, the processor 801 is configured to invoke an interface to perform the following actions:

receiving a first downlink reference signal from a first network device; receiving a second downlink reference signal from a second network device; generating a sequence of a first uplink reference signal and a sequence of a second uplink reference signal, where the sequence of the first uplink reference signal is determined based on a channel estimation value of the first downlink reference signal, and the sequence of the second uplink reference signal is determined based on a channel estimation value of the second downlink reference signal; and sending the first uplink reference signal to the second network device, and sending the second uplink reference signal to the first network device.

It should be understood that the apparatus 800 may be further configured to perform other steps and/or operations on a terminal device side in the foregoing embodiments. For brevity, details are not described herein.

It should be understood that the processor 801 may invoke the interface to perform the foregoing receiving and sending actions. The invoked interface may be a logical interface or a physical interface. This is not limited. Optionally, the physical interface may be implemented by using a transceiver. Optionally, the apparatus 800 further includes a transceiver 803.

Optionally, the apparatus 800 further includes a memory 802, and the memory 802 may store program code in the foregoing method embodiment, so that the processor 801 invokes the program code.

Specifically, if the apparatus 800 includes the processor 801, the memory 802, and the transceiver 803, the processor 801, the memory 802, and the transceiver 803 communicate with each other through an inner connection path, to transmit a control signal and/or a data signal. In a possible design, the processor 801, the memory 802, and the transceiver 803 may be implemented by a chip. The processor 801, the memory 802, and the transceiver 803 may be implemented in a same chip, or may be separately implemented in different chips, or functions of any two of the processor 801, the memory 802, and the transceiver 803 are implemented in one chip. The memory 802 may store the program code, and the processor 801 invokes the program code stored in the memory 802, to implement a corresponding function of the apparatus 800.

The method disclosed in the foregoing embodiment of this application may be applied to the processor, or may be implemented by the processor. The processor may be an integrated circuit chip and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly, or a system on chip (system on chip, SoC), a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numerical numbers or sequence numbers involved in the foregoing processes are merely distinguished for ease of description, and should not constitute any limitation on the implementation processes of embodiments of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the field may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

**Claims**

1.   A communication method, wherein the method comprises:

   receiving, a first downlink reference signal from a first network device;
   receiving, a second downlink reference signal from a second network device;
   determining, channel state information CSI, wherein the CSI is determined based on a ratio of a first channel estimation value to a second channel estimation value, the first channel estimation value is determined based on the first downlink reference signal, and the second channel estimation value is determined based on the second downlink reference signal; and
   sending, the CSI.

2.   The method according to claim 1, wherein receive antennas, receive antenna ports, or receive beams of the first downlink reference signal and the second downlink reference signal are the same.

3.   The method according to claim 1 or 2, wherein the receiving a first downlink reference signal from a first network device comprises:

receiving, the first downlink reference signal at a first moment; and
the receiving, a second downlink reference signal from a second network device comprises:

receiving, the second downlink reference signal at a second moment, wherein
a time interval $\Delta t1$ between the first moment and the second moment satisfies $\Delta t1 \leq T1$, wherein $T1 \geq 0$, and
T1 is a preset value or a value indicated by capability indication information reported by the terminal device.

4. The method according to any one of claims 1 to 3, wherein an error between a phase value $\varphi_1$ corresponding to a receive antenna used by the terminal device to receive the first downlink reference signal and a phase value $\varphi_2$ corresponding to a receive antenna used by the terminal device to receive the second downlink reference signal satisfies $|\varphi_1 - \varphi_2| \leq \partial$, wherein $\partial$ is a preset value greater than 0.

5. The method according to any one of claims 1 to 4, wherein the CSI comprises amplitude quantization information and phase quantization information, and the amplitude quantization information and the phase quantization information are determined based on the ratio of the first channel estimation value to the second channel estimation value.

6. The method according to any one of claims 1 to 5, wherein the first channel estimation value is a channel estimation value of bandwidth $W_1$ occupied by the first downlink reference signal, and the second channel estimation value is a channel estimation value of bandwidth $W_2$ occupied by the second downlink reference signal.

7. The method according to any one of claims 1 to 5, wherein both the bandwidth $W_1$ occupied by the first downlink reference signal and the bandwidth $W_2$ occupied by the second downlink reference signal comprise K subbands; and the first channel estimation value is a channel estimation value of a $k^{th}$ subband in the first downlink reference signal, and the second channel estimation value is a channel estimation value of a $k^{th}$ subband in the second downlink reference signal, wherein k ranges from 1 to K, k is a positive integer, and K is an integer greater than or equal to 2.

8. The method according to any one of claims 5 to 7, wherein an index value of the first downlink reference signal is less than an index value of the second downlink reference signal, the amplitude quantization information and the phase quantization information that are comprised in the CSI correspond to a first estimation value, and the first estimation value is the ratio of the first channel estimation value to the second channel estimation value.

9. The method according to any one of claims 1 to 8, further comprising:
sending, an uplink reference signal to the first network device and the second network device.

10. The method according to claim 9, wherein a transmit antenna corresponding to the uplink reference signal is the same as a receive antenna corresponding to the first downlink reference signal.

11. The method according to claim 9 or 10, wherein bandwidth occupied by the uplink reference signal is the same as the bandwidth $W_1$ occupied by the first downlink reference signal.

12. The method according to claim 11, wherein the bandwidth $W_1$ occupied by the first downlink reference signal is the same as the bandwidth $W_2$ occupied by the second downlink reference signal, and $W_1 = W_2$.

13. The method according to any one of claims 9 to 12, wherein the sending, an uplink reference signal to the first network device and the second network device comprises:

sending, the uplink reference signal to the first network device and the second network device at a third moment, wherein
a time interval $\Delta t2$ between the third moment and the first moment satisfies $\Delta t2 \leq T2$, wherein $T2 \geq 0$, and T2 is a preset value or a value indicated by the capability indication information reported by the terminal device; and/or
a time interval $\Delta t3$ between the third moment and the second moment satisfies $\Delta t3 \leq T3$, wherein $T3 \geq 0$, and T3 is a preset value or a value indicated by the capability indication information reported by the terminal device.

14. A communication method, wherein the method comprises:
sending, a first downlink reference signal;

receiving, CSI, wherein the CSI is determined based on a ratio of a first channel estimation value to a second channel estimation value, the first channel estimation value corresponds to the first downlink reference signal, the second channel estimation value corresponds to a second downlink reference signal, and the second downlink reference signal corresponds to a second network device; and
receiving, an uplink reference signal.

15. The method according to claim 14, wherein bandwidth occupied by the uplink reference signal is the same as bandwidth $W_1$ occupied by the first downlink reference signal.

16. The method according to claim 15, wherein the bandwidth $W_1$ occupied by the first downlink reference signal is the same as bandwidth $W_2$ occupied by the second downlink reference signal, and $W_1 = W_2$.

17. The method according to any one of claims 14 to 16, wherein the CSI comprises amplitude quantization information and phase quantization information, and the amplitude quantization information and the phase quantization information are determined based on the ratio of the first channel estimation value to the second channel estimation value.

18. The method according to any one of claims 14 to 17, wherein the first channel estimation value is a channel estimation value of the bandwidth $W_1$ occupied by the first downlink reference signal, and the second channel estimation value is a channel estimation value of the bandwidth $W_2$ occupied by the second downlink reference signal.

19. The method according to any one of claims 14 to 18, wherein both the bandwidth $W_1$ occupied by the first downlink reference signal and the bandwidth $W_2$ occupied by the second downlink reference signal comprise K subbands; and the first channel estimation value is a channel estimation value of a $k^{th}$ subband in the first downlink reference signal, and the second channel estimation value is a channel estimation value of a $k^{th}$ subband in the second downlink reference signal, wherein k ranges from 1 to K, k is a positive integer, and K is an integer greater than or equal to 2.

20. The method according to any one of claims 14 to 19, wherein an index value of the first downlink reference signal is less than an index value of the second downlink reference signal, the amplitude quantization information and the phase quantization information that are comprised in the CSI correspond to a first estimation value, and the first estimation value is the ratio of the first channel estimation value to the second channel estimation value.

21. The method according to any one of claims 14 to 20, further comprising:
determining, a third channel estimation value based on the uplink reference signal, wherein the third channel estimation value is a first channel estimation value of the uplink reference signal.

22. The method according to claim 21, wherein a receive antenna used by the first network device to receive the uplink reference signal is the same as a transmit antenna used by the first network device to send the first downlink reference signal.

23. The method according to claim 21 or 22, further comprising:
sending, the third channel estimation value.

24. The method according to claim 21 or 22, further comprising:

receiving, a fourth channel estimation value from the second network device, wherein the fourth channel estimation value is a second channel estimation value of the uplink reference signal; and
determining, a calibration coefficient between the first network device and the second network device based on the CSI, the third channel estimation value, and the fourth channel estimation value.

25. The method according to claim 24, wherein when the first channel estimation value is the channel estimation value of the bandwidth $W_1$ occupied by the first downlink reference signal, and the second channel estimation value is the channel estimation value of the bandwidth $W_2$ occupied by the second downlink reference signal, the third channel estimation value is a first channel estimation value of the bandwidth occupied by the uplink reference signal, and the fourth channel estimation value is a second channel estimation value of the bandwidth occupied by the uplink reference signal.

26. The method according to claim 24, wherein when the first channel estimation value is the channel estimation value of the $k^{th}$ subband in the first downlink reference signal, and the second channel estimation value is the channel estimation value of the $k^{th}$ subband in the second downlink reference signal, the third channel estimation value is a first channel estimation value of a $k^{th}$ subband in the uplink reference signal, and the fourth channel estimation value is a second channel estimation value of the $k^{th}$ subband in the uplink reference signal, wherein both the bandwidth $W_1$ occupied by the first downlink reference signal and the bandwidth $W_2$ occupied by the second downlink reference signal comprise K subbands, the bandwidth occupied by the uplink reference signal comprises K subbands, k ranges from 1 to K, k is a positive integer, and K is an integer greater than or equal to 2.

27. The method according to any one of claims 24 to 26, wherein the calibration coefficient is a ratio of a first ratio to a second ratio, the first ratio is the ratio of the first channel estimation value to the second channel estimation value, and the second ratio is a ratio of the third channel estimation value to the fourth channel estimation value.

28. A communication method, wherein the method comprises:

receiving, a first downlink reference signal from a first network device;
receiving, a second downlink reference signal from a second network device;
generating, a sequence of a first uplink reference signal and a sequence of a second uplink reference signal, wherein the sequence of the first uplink reference signal is determined based on a channel estimation value of the first downlink reference signal, and the sequence of the second uplink reference signal is determined based on a channel estimation value of the second downlink reference signal; and
sending, the first uplink reference signal to the second network device, and sending the second uplink reference signal to the first network device.

29. The method according to claim 28, wherein receive antennas, receive antenna ports, or receive beams of the first downlink reference signal and the second downlink reference signal are the same.

30. The method according to claim 28 or 29, wherein the receiving, a first downlink reference signal from a first network device comprises:

receiving, the first downlink reference signal at a first moment; and
the receiving, a second downlink reference signal from a second network device comprises:

receiving, the second downlink reference signal at a second moment, wherein
a time interval $\Delta t1$ between the first moment and the second moment satisfies $\Delta t1 \leq T1$, wherein $T1 \geq 0$, and T1 is a preset value or a value indicated by capability indication information reported by the terminal device.

31. The method according to any one of claims 28 to 30, wherein an error between a phase value $\varphi_1$ corresponding to a receive antenna used by the terminal device to receive the first downlink reference signal and a phase value $\varphi_2$ corresponding to a receive antenna used by the terminal device to receive the second downlink reference signal satisfies $|\varphi_1 - \varphi_2| \leq \partial$, wherein $\partial$ is a preset value greater than 0.

32. The method according to any one of claims 28 to 31, wherein a transmit antenna corresponding to the first uplink reference signal is the same as a receive antenna corresponding to the first downlink reference signal, and a transmit antenna corresponding to the second uplink reference signal is the same as a receive antenna corresponding to the second downlink reference signal.

33. The method according to any one of claims 30 to 32, wherein the sending, the first uplink reference signal to the second network device comprises:

sending, by the terminal device, the first uplink reference signal to the second network device at a third moment, wherein
a time interval $\Delta t4$ between the first moment and the third moment satisfies $\Delta t4 \leq T4$, wherein $T4 \geq 0$, and T4 is a preset value or a value indicated by the capability indication information reported by the terminal device.

34. The method according to any one of claims 30 to 33, wherein the sending, by the terminal device, the second uplink reference signal to the first network device comprises:

sending, the second uplink reference signal to the first network device at a fourth moment, wherein
a time interval $\Delta t5$ between the second moment and the fourth moment satisfies $\Delta t5 \leq T5$, wherein $T5 \geq 0$, and T5 is a preset value or a value indicated by the capability indication information reported by the terminal device.

**35.** The method according to any one of claims 28 to 34, wherein a frequency domain unit occupied by the first uplink reference signal is the same as a frequency domain unit occupied by the first downlink reference signal, and a frequency domain unit occupied by the second uplink reference signal is the same as a frequency domain unit occupied by the second downlink reference signal.

**36.** The method according to any one of claims 28 to 35, wherein a sequence in an $n_1^{th}$ frequency domain unit corresponding to the first uplink reference signal is determined based on a channel estimation value of an $n_1^{th}$ frequency domain unit corresponding to the first downlink reference signal, $n_1$ ranges from 1 to $N_1$, $n_1$ and $N_1$ are positive integers, and $N_1$ is a quantity of frequency domain units occupied by the first uplink reference signal; and

a sequence in an $n_2^{th}$ frequency domain unit corresponding to the second uplink reference signal is determined based on a channel estimation value of an $n_2^{th}$ frequency domain unit corresponding to the second downlink reference signal, $n_2$ ranges from 1 to $N_2$, $n_2$ and $N_2$ are positive integers, and $N_2$ is a quantity of frequency domain units occupied by the second uplink reference signal.

**37.** The method according to claim 36, wherein the sequence of the first uplink reference signal is

$$r_1(m_1) = e^{j\alpha_1 m_1}\bar{r}_1(m_1)\widehat{H}_{m_1}^1, \quad \widehat{H}_{m_1}^1$$ is determined based on a channel estimation value of an $m_1^{th}$ resource element RE corresponding to the first downlink reference signal, $\alpha_1$ and $\bar{r}_1$ are respectively a cyclic shift and a basic sequence of the first uplink reference signal, $m_1=\{0, 1, ..., M_1\}$, $m_1$ and $M_1$ are positive integers, and $M_1$ is a quantity of REs occupied by the first uplink reference signal; and

the sequence of the second uplink reference signal is $$r_2(m_2) = e^{j\alpha_2 m_2}\bar{r}_2(m_2)\widehat{H}_{m_2}^2$$, wherein $\widehat{H}_{m_2}^2$ is determined based on a channel estimation value of an $m_2^{th}$ RE corresponding to the second downlink reference signal, $\alpha_2$ and $\bar{r}_2$ are respectively a cyclic shift and a basic sequence of the second uplink reference signal, $m_2=\{0, 1, ..., M_2\}$, $m_2$ and $M_2$ are positive integers, and $M_2$ is a quantity of REs occupied by the second uplink reference signal.

**38.** A communication method, wherein the method comprises:

sending, a first downlink reference signal;
receiving, a second uplink reference signal, wherein a sequence of the second uplink reference signal is determined based on a channel estimation value of a second downlink reference signal, and the second downlink reference signal is related to a second network device; and determining, a second channel estimation value based on the second uplink reference signal; and
sending, the second channel estimation value to the second network device; or
receiving, a first channel estimation value sent by the second network device, wherein the first channel estimation value is determined based on a first uplink reference signal, and a sequence of the first uplink reference signal is determined based on a channel estimation value of the first downlink reference signal.

**39.** The method according to claim 38, wherein a receive antenna corresponding to the second uplink reference signal is the same as a transmit antenna corresponding to the first downlink reference signal.

**40.** The method according to claim 38 or 39, wherein a frequency domain unit occupied by the second uplink reference signal is the same as a frequency domain unit occupied by the second downlink reference signal.

**41.** The method according to any one of claims 38 to 40, wherein a sequence in an $n_2^{th}$ frequency domain unit corresponding to the second uplink reference signal is determined based on a channel estimation value of an $n_2^{th}$ frequency domain unit corresponding to the second downlink reference signal, $n_2$ ranges from 1 to $N_2$, $n_2$ and $N_2$ are positive integers, and $N_2$ is a quantity of frequency domain units occupied by the second uplink reference signal.

**42.** The method according to claim 41, wherein the sequence of the second uplink reference signal is

$$r_2(m_2) = e^{j\alpha_2 m_2}\bar{r}_2(m_2)\widehat{H}_{m_2}^2, \quad \widehat{H}_{m_2}^2$$ is determined based on a channel estimation value of an $m_2^{th}$ RE corresponding to the second downlink reference signal, $\alpha_2$ and $\bar{r}_2$ are respectively a cyclic shift and a basic sequence of the second uplink reference signal, $m_2=\{0, 1, ..., M_2\}$, $m_2$ and $M_2$ are positive integers, and $M_2$ is a quantity of REs occupied by the second uplink reference signal.

43. The method according to claim 41, wherein the first channel estimation value is a channel estimation value corresponding to an $n^{th}$ frequency domain unit of the first uplink reference signal, the second channel estimation value is a channel estimation value corresponding to an $n^{th}$ frequency domain unit of the second uplink reference signal, N is a quantity of frequency domain units occupied by the first uplink reference signal, n ranges from 1 to N, and n and N are positive integers.

44. The method according to any one of claims 38 to 43, further comprising:
determining, a calibration coefficient between the first network device and the second network device based on the first channel estimation value and the second channel estimation value.

45. The method according to claim 44, wherein the calibration coefficient is a ratio of the first channel estimation value to the second channel estimation value.

46. A communication apparatus, wherein the apparatus comprises a processor and an interface circuit, the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 45 by using a logic circuit or by executing code instructions.

47. A computer-readable storage medium, wherein the storage medium stores a computer program or instructions, and when the computer program or the instructions are executed by a communication apparatus, the method according to any one of claims 1 to 45 is implemented.

FIG. 1

FIG. 2

TRP 1

$$t_1^1 \quad r_1^1 \qquad t_n^1 \quad r_n^1 \qquad t_N^1 \quad r_N^1$$

$$\rho_1^1 = \frac{t_1^1}{r_1^1} \quad \cdots \quad \rho_n^1 = \frac{t_n^1}{r_n^1} \quad \cdots \quad \rho_N^1 = \frac{t_N^1}{r_N^1}$$

$H_1$

Uplink channel estimated
by the TRP 1

$$t_1^{UE} \cdots t_K^{UE}$$

$H_1$

Actual downlink
channel of the
TRP 1

$$r_1^{UE} \cdots r_K^{UE}$$

$H_1$

$$r_1^1 \quad \cdots \quad r_N^1$$

$$t_1^1 \quad \cdots \quad t_N^1$$

Terminal reciprocity
calibration

Reciprocity
calibration in the
TRP

$$t_1^{UE} \quad r_1^{UE} \qquad t_K^{UE} \quad r_K^{UE}$$

TRP 2

$$t_1^2 \quad r_1^2 \qquad t_n^2 \quad r_n^2 \qquad t_N^2 \quad r_N^2$$

$H_2$

$$\rho_1^2 = \frac{t_1^2}{r_1^2} \quad \cdots \quad \rho_n^1 = \frac{t_n^2}{r_n^2} \quad \cdots \quad \rho_N^2 = \frac{t_N^2}{r_N^2}$$

Uplink channel estimated
by the TRP 2

$$t_1^{UE} \cdots t_K^{UE}$$

$H_2$

Actual downlink
channel of the
TRP 2

$$r_1^{UE} \cdots r_K^{UE}$$

$H_2$

$$r_1^2 \quad \cdots \quad r_N^2$$

$$t_1^2 \quad \cdots \quad t_N^2$$

Terminal reciprocity
calibration

Reciprocity
calibration in the
TRP

Reciprocity calibration
between TRPs

FIG. 3

EP 4 456 452 A1

First network
device

Second network
device

Terminal
device

Step 401: The first network
device sends a first downlink
reference signal

Step 402: The second network
device sends a second downlink
reference signal

Step 403: The terminal
device determines CSI

Step 404: The terminal
device sends the CSI

Step 405: Uplink reference signal

Step 405: Uplink
reference signal

Step 406A: The first
network device
determines a third
channel estimation
value based on the
uplink reference signal

Step 406B: The second
network device
determines a fourth
channel estimation
value based on the
uplink reference signal

Step 407: The second network
device sends the fourth
channel estimation value to the
first network device

Step 408: The first network
device determines a calibration
coefficient between the first
network device and the second
network device based on the
CSI, the third channel estimation
value, and the fourth channel
estimation value

FIG. 4

| First network device | Second network device | Terminal device |
|---|---|---|

Step 501: The first network device sends a first downlink reference signal

Step 502: The second network device sends a second downlink reference signal

Step 503A: Second uplink reference signal

Step 503B: First uplink reference signal

Step 504A: The first network device determines a channel estimation value of the second uplink reference signal based on the second uplink reference signal

Step 504B: The second network device determines a channel estimation value of the first uplink reference signal based on the first uplink reference signal

Step 505: The second network device sends the channel estimation value of the first uplink reference signal to the first network device

Step 506: The first network device determines a calibration coefficient between the first network device and the second network device based on the channel estimation value of the first uplink reference signal and the channel estimation value of the second uplink reference signal

FIG. 5

**Signals loaded on an SRS**

FIG. 6

FIG. 7

Apparatus 800

Processor 801

Transceiver 803

Memory 802

FIG. 8

## INTERNATIONAL SEARCH REPORT

| International application No. |
|---|
| **PCT/CN2022/139129** |

| | |
|---|---|
| **A.** | **CLASSIFICATION OF SUBJECT MATTER** |
| | H04B17/11(2015.01)i;H04B7/06(2006.01)i;H04L5/00(2006.01)i |
| | According to International Patent Classification (IPC) or to both national classification and IPC |

| | |
|---|---|
| **B.** | **FIELDS SEARCHED** |

Minimum documentation searched (classification system followed by classification symbols)

   IPC: H04B17/-, H04B7/-, H04L5/-

Documentation searched other than minimum documentation to the extent that such documents are included in the fields searched

Electronic data base consulted during the international search (name of data base and, where practicable, search terms used)

   CNABS, CNTXT, CNKI: 参考信号, RS, 信道状态信息, CSI, 比例, 比值, 比率, 估计, 预估, 相干, 联合传输, 联合发送, CJT, CoMP, 互易, 校正, 调整; VEN, ENTXT, 3gpp, IEEE: reference signal, RS, CSI, channel state info+, channel state ind+, ratio, estimat+, coherent, joint tran+, CJT, CoMP, reciprocity, revis+, rectif+, correction, adjust+.

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | US 2021297135 A1 (LG ELECTRONICS INC.) 23 September 2021 (2021-09-23) description, paragraphs [335]-[373], [440]-[486], and [494]-[496], and figures 18-19 | 1-2, 6-7, 9-10, 12, 14-16, 18-19, 21-23, 46-47 |
| A | CN 111726172 A (HUAWEI TECHNOLOGIES CO., LTD.) 29 September 2020 (2020-09-29) entire document | 1-47 |
| A | US 2021119749 A1 (QUALCOMM INC.) 22 April 2021 (2021-04-22) entire document | 1-47 |
| A | WO 2014023727 A1 (NOKIA SIEMENS NETWORKS OY) 13 February 2014 (2014-02-13) entire document | 1-47 |
| A | NTT DOCOMO. "CSI feedback scheme for JT CoMP" *3GPP TSG RAN WG1 Meeting #66bis R1-113292*, 04 October 2011 (2011-10-04), entire document | 1-47 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 March 2023** | **07 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/139129**

| Patent document cited in search report | | | Publication date (day/month/year) | Patent family member(s) | | | Publication date (day/month/year) |
|---|---|---|---|---|---|---|---|
| US | 2021297135 | A1 | 23 September 2021 | DE | 112019003523 | T5 | 27 May 2021 |
| | | | | WO | 2020032621 | A1 | 13 February 2020 |
| | | | | CN | 112567645 | A | 26 March 2021 |
| CN | 111726172 | A | 29 September 2020 | CN | 111726172 | B | 26 October 2021 |
| | | | | WO | 2020192564 | A1 | 01 October 2020 |
| | | | | EP | 3923492 | A1 | 15 December 2021 |
| | | | | EP | 3923492 | A4 | 20 April 2022 |
| | | | | US | 2021399812 | A1 | 23 December 2021 |
| US | 2021119749 | A1 | 22 April 2021 | WO | 2021080912 | A1 | 29 April 2021 |
| | | | | US | 11582002 | B2 | 14 February 2023 |
| WO | 2014023727 | A1 | 13 February 2014 | WO | 2014023727 | A9 | 20 March 2014 |
| | | | | US | 2015195071 | A1 | 09 July 2015 |
| | | | | US | 9660784 | B2 | 23 May 2017 |

Form PCT/ISA/210 (patent family annex) (July 2022)

**REFERENCES CITED IN THE DESCRIPTION**

**Patent documents cited in the description**

- CN 202111673730